Europäisches Patentamt

European Patent Office

Office européen des brevets

(19)

(11) **EP 1 548 164 A1**

(12) **EUROPEAN PATENT APPLICATION**
published in accordance with Art. 158(3) EPC

(43) Date of publication:
29.06.2005 Bulletin 2005/26

(51) Int Cl.⁷: **D04H 1/42**, H01M 4/96,
H01M 4/88

(21) Application number: 03799128.8

(22) Date of filing: 25.09.2003

(86) International application number:
**PCT/JP2003/012231**

(87) International publication number:
**WO 2004/031465 (15.04.2004 Gazette 2004/16)**

(84) Designated Contracting States:
**AT BE BG CH CY CZ DE DK EE ES FI FR GB GR HU IE IT LI LU MC NL PT RO SE SI SK TR**

(30) Priority: 30.09.2002 JP 2002285627
26.03.2003 JP 2003084642

(71) Applicant: **TORAY INDUSTRIES, INC.**
**Tokyo 103-8666 (JP)**

(72) Inventors:
• **INOUE, Mikio**
**Otsu-shi, Shiga 520-0842 (JP)**

• **CHIDA, Takashi**
**Otsu-shi, Shiga 520-0842 (JP)**
• **OKADA, Kenya**
**Otsu-shi, Shiga 520-0842 (JP)**
• **ISOI, Shinya**
**Kyoto-shi, Kyoto 607-8088 (JP)**

(74) Representative: **Schaeberle, Steffen**
**Hoefer & Partner,**
**Patentanwälte,**
**Gabriel-Max-Strasse 29**
**81545 München (DE)**

(54) **FLAME-RESISTANT ACRYLIC FIBER NONWOVEN FABRIC, CARBON FIBER NONWOVEN FABRIC, AND METHOD FOR PRODUCTION THEREOF**

(57)     A nonwoven fabric comprising flame-retardant acrylic fibers, **characterized in that** it has a weight per square-meter of 70 to 190 g/m², a thickness of 0.1 to 0.3 mm, a density of 0.35 to 0.8 g/cm³; and a nonwoven fabric comprising carbon fibers, **characterized in that** it has a weight per square-meter of 50 to 150 g/m², a thickness of 0.1 to 0.25 mm, a density of 0.3 to 0.7 g/cm³, a surface roughness Ra of 30 µm or less, a tensile strength of 0.2 kgf/cm or more, and a maximum fracture radius being defined in the specification of 20 mm or less. Said carbon fiber nonwoven fabric is produced by subjecting the flame-retardant acrylic fiber nonwoven fabric to a carbonization treatment and can be suitably used as a material for forming an electrode of a fuel cell.

EP 1 548 164 A1

**Description**

TECHNICAL FIELD

The present invention relates to an oxidized acrylic fiber nonwoven fabric, a carbon fiber nonwoven fabric and a method for production thereof. Furthermore, the present invention relates to an electrode, electrode diffusion layer, fuel cell unit and fuel cell, in which the carbon fiber nonwoven fabric of the invention is used as an electrode-forming material.

The oxidized acrylic fiber nonwoven fabric of the invention is characterized by a dense structure and small thickness. The carbon fiber nonwoven fabric of the invention is also characterized by a dense structure and small thickness.

The oxidized acrylic fiber nonwoven fabric of the invention can be preferably used for producing the carbon fiber nonwoven fabric of the invention. The carbon fiber nonwoven fabric of the invention can be preferably used as an electrode diffusion layer of a solid polymer type fuel cell.

BACKGROUND ART

It is attempted to use a carbon fiber nonwoven fabric as an electrode-forming material of a fuel cell. The attempts are disclosed in JP 2002-194650 A and WO 02/42534 A1. These documents respectively disclose a carbon fiber nonwoven fabric obtained by carbonization treatment of an oxidized polyacrylonitrile (PAN)-based fiber nonwoven fabric.

The densities of the carbon fiber nonwoven fabrics disclosed in the examples of these documents are low. These documents respectively disclose a case where carbonization treatment of an oxidized fiber nonwoven fabric is performed without resin impregnation into the nonwoven fabric, to produce a carbon fiber nonwoven fabric, and also a case where resin impregnation into the nonwoven fabric is performed and followed by carbonization treatment of it for producing a carbon fiber nonwoven fabric. In the former case, the obtained carbon fiber nonwoven fabric has a high weight per square-meter, large thickness and low density. Because of the low density, the surface roughness is large, and the modulus of elasticity in flexure is low. In the case where such a carbon fiber nonwoven fabric is used as an electrode diffusion layer of a fuel cell, it does not sufficiently function as a diffusion layer. That is, it brings drying-up of an electrolyte membrane, and declining of a cell characteristic. Furthermore, it brings crushing of the nonwoven fabric and narrowing gas passages formed in a separator. In the latter case, the obtained carbon fiber nonwoven fabric is fragile and low in flexibility, since it is produced by carbonization treatment of an oxidized fiber nonwoven fabric impregnated with a resin.

JP 10-167855 A discloses a carbon fiber sheet obtained by impregnating a resin into a short carbon fiber sheet formed by a wet paper making process, and treating it for carbonization. The carbon fiber sheet is a porous carbon sheet having a structure in which short carbon fibers are bonded to each other by carbon composed of the carbonized resin. In the document, it is explained that the porous carbon sheet can be used as an electrode material of fuel cells. However, the porous carbon sheet is poor in flexibility, and it is difficult to obtain a continuous and long material.

As a flexible porous carbon sheet in which carbon fibers are bound to each other by carbon, Spectra Corp. launches SpectraCarb2050L. However, the maximum fracture radius of the carbon sheet is 25 mm, and it cannot be considered that it has sufficient flexibility for use as a material forming an electrode. If the thickness of the carbon sheet is reduced, the maximum fracture radius can be lessened, but in this case, since the carbon sheet per se is fragile, it is likely to be fractured due to the shear and local bending at the portion in contact with the open end of the groove forming the passage of the separator.

WO 01/56103 A1 proposes a method for producing a flexible carbon sheet by reducing the carbon fiber diameter of a porous carbon sheet. However, since the fiber diameter is small, the gas permeability and pore size decline, and in the case where the carbon sheet is used as an electrode of a solid polymer type fuel cell, it is difficult to obtain excellent cell characteristics.

It is known to produce a carbon fiber nonwoven fabric by carbonizing an oxidized acrylic fiber nonwoven fabric formed by a dry method. However, the carbon fiber nonwoven fabric as it is has such problems as being bulky and having high electric resistance and large surface roughness. To solve the problems, JP 2001-240477 A proposes a method in which an oxidized acrylic fiber nonwoven fabric is impregnated with a resin and carbonized. However, the carbon fiber nonwoven fabric obtained by this method is a porous carbon sheet in which the impregnated resin is carbonized, and its flexibility is low.

As a flexible material having good properties as an electrode diffusion layer of a fuel cell, EP 1,139,471 A1 discloses a porous conductive sheet formed of numerous carbon fibers having an organic substance deposited. However, if an organic substance other than fluoroplastics is used in an electrode diffusion layer, such problems as oxidative deterioration and increase of hydrophilicity with the lapse of time occur. Also in the case where a fluoroplastic is used as the organic substance, it cannot be considered that the values of pore size, modulus of elasticity in flexure, gas permeability and density show optimum properties as an electrode diffusion layer of a fuel cell, as described in the examples of the document. Since the porous conductive sheet has a low modulus of elasticity in flexure, it can happen that the gas passages of the separator are narrowed. Furthermore, because of large pore size, high gas permeability and low density, it can happen that the electrolyte membrane is dried. In this case, the cell characteristics decline.

The present invention has been made in view of the above-mentioned problems of the prior art. An object of the invention is to provide a thin and dense oxidized acrylic fiber nonwoven fabric without impairing flame retardancy and heat resistance. Furthermore, another object of the invention is to provide a thin and dense carbon fiber nonwoven fabric having a thickness, density, gas permeability and pore size most suitable as an electrode diffusion layer of a fuel cell, and further having a high modulus of elasticity in flexure, small deformation due to compression, small surface roughness and high flexibility suitable as an electrode diffusion layer of a fuel cell.

Moreover, a further other object of the invention is to provide a carbon fiber nonwoven fabric structurally optimized in view of the diffusion and transfer of gas and water and assuring high cell characteristics.

Furthermore, a still further other object of the invention is to provide a method for producing an oxidized acrylic fiber nonwoven fabric and a method for producing a carbon fiber nonwoven fabric, in which an oxidized acrylic fiber nonwoven fabric or a carbon fiber nonwoven fabric is pressurized by a continuous press such as a roll press or a continuous flat plate press, for efficiently producing a thin and dense oxidized acrylic fiber nonwoven fabric or a thin and dense carbon fiber nonwoven fabric at a low cost.

DISCLOSURE OF THE INVENTION

The present invention for achieving the objects is as follows.

(1) An oxidized acrylic fiber nonwoven fabric, characterized in that it has a weight per square-meter of 70 to 190 $g/m^2$, a thickness of 0.1 to 0.3 mm and a density of 0.35 to 0.8 $g/cm^3$.

(2) An oxidized acrylic fiber nonwoven fabric, according to item (1), wherein the thickness change due to compression as the difference between the thickness at a planar pressure of 0.15 MPa and the thickness at a planar pressure of 1.0 MPa is 0.15 mm or less.

(3) An oxidized acrylic fiber nonwoven fabric, according to item (1) or (2), wherein the oxidized acrylic fibers are oriented also in the thickness direction of the nonwoven fabric.

(4) An oxidized acrylic fiber nonwoven fabric, according to any one of items (1) through (3), which is substantially formed of oxidized acrylic fibers only.

(5) A carbon fiber nonwoven fabric, characterized in that it is formed of carbon fibers and has a weight per square-meter of 50 to 150 $g/m^2$, a thickness of 0.1 to 0.25 mm, a density of 0.3 to 0.7 $g/cm^3$, a surface roughness Ra of 30 µm or less, a tensile strength of 0.2 kgf/cm or more and a maximum fracture radius of 20 mm or less.

(6) A carbon fiber nonwoven fabric, according to item (5), which is substantially formed of carbon fibers only.

(7) A carbon fiber nonwoven fabric, characterized in that it is formed of substantially carbon fibers only and has a weight per square-meter of 50 to 150 $g/m^2$, a thickness of 0.1 to 0.25 mm, a density of 0.3 to 0.7 $g/cm^3$, a surface roughness Ra of 30 µm or less, a peak size of 10 to 60 µm in the pore size distribution and a tensile strength of 0.2 kgf/cm or more.

(8) A carbon fiber nonwoven fabric, according to any one of items (5) through (7), wherein the thickness change due to compression as the difference between the thickness at a planar pressure of 0.15 MPa and the thickness at a planar pressure of 1.0 MPa is 0.15 mm or less.

(9) A carbon fiber nonwoven fabric, according to any one of items (5) through (8), wherein the modulus of elasticity in flexure is 0.1 GPa or more.

(10) A carbon fiber nonwoven fabric, according to any one of items (5) through (9), wherein the differential pressure occurring when air of 14 cm/sec is permeated through the nonwoven fabric in the thickness direction is from 1 to 10 mm Aq.

(11) A carbon fiber nonwoven fabric, according to any one of items (5) through (10), wherein the electric resistance in the thickness direction is 15 mΩ·$cm^2$ or less.

(12) A carbon fiber nonwoven fabric, characterized in that it has a weight per square-meter of 60 to 110 $g/m^2$, a thickness of 0.13 to 0.22 mm, a density of 0.4 to 0.7 $g/cm^3$, a maximum fracture radius of 20 mm or less, a surface roughness Ra of 20 µm or less, a thickness change due to compression as the difference between the thickness at a planar pressure of 0.15 MPa and the thickness at a planar pressure of 1.0 MPa is 0.1 mm or less, a tensile strength of 0.5 kgf/cm or more, a modulus of elasticity in flexure of 0.3 GPa or more, a peak size of 15 to 50 µm in the pore size distribution, an electric resistance of 15 mΩ·$cm^2$ or less in the thickness direction, and a differential pressure of 2 to 7 mm Ag occurring when air of 14 cm/sec is permeated through the nonwoven fabric in the thickness direction.

(13) A carbon fiber nonwoven fabric, according to any one of items (5) and (8) through (12), wherein carbon black is contained on the surface of and/or inside the fabric.

(14) A carbon fiber nonwoven fabric, according to any one of items (5) and (8) through (13), which contains a water-repellent substance.

(15) A carbon fiber nonwoven fabric, characterized in that it is formed of carbon fibers and a water-repellent substance and has a weight per square-meter of 60 to 180 $g/m^2$, a thickness of 0.1 to 0.25 mm, a density of 0.35 to 0. 9 $g/cm^3$, a surface roughness Ra of 25 $\mu$m or less, a maximum fracture radius of 20 mm or less and a modulus of elasticity in flexure of 0.5 GPa or more.

(16) A carbon fiber nonwoven fabric, according to item (15), wherein the thickness change due to compression as the difference between the thickness at a planar pressure of 0.15 MPa and the thickness at a planar pressure of 1.0 MPa is 0.15 mm or less.

(17) A carbon fiber nonwoven fabric, according to item (15) or (16), which has a tensile strength of 0.7 kgf/cm or more.

(18) A carbon fiber nonwoven fabric, according to any one of items (15) through (17), wherein the differential pressure occurring when air of 14 cm/sec is permeated through the nonwoven fabric in the thickness direction is from 2 to 12 mm Aq.

(19) A carbon fiber nonwoven fabric, characterized in that it is formed of carbon fibers and a water-repellent substance and has a weight per square-meter of 70 to 130 $g/m^2$, a thickness of 0.13 to 0.22 mm, a density of 0. 45 to 0.7 $g/cm^3$, a surface roughness Ra of 15 $\mu$m or less, a maximum fracture radius of 20 mm or less, a thickness change due to compression of 0.1 mm or less as the difference between the thickness at a planar pressure of 0.15 MPa and the thickness at a planar pressure of 1.0 MPa, a tensile strength of 1.0 kgf/cm or more, a modulus of elasticity in flexure of 1.0 GPa or more and a differential pressure of 2 to 8 mm Aq occurring when air of 14 cm/ sec is permeated through the nonwoven fabric in the thickness direction.

(20) A carbon fiber nonwoven fabric, according to any one of items (15) through (19), which is substantially formed of carbon fibers and a water-repellent substance only.

(21) A carbon fiber nonwoven fabric, characterized in that it is formed of carbon fibers, fine carbon particles and a water-repellent substance, with the fine carbon fibers existing locally on one side of the nonwoven fabric, and has a weight per square-meter of 70 to 200 $g/m^2$, a thickness of 0.12 to 0.27 mm, a surface roughness Ra of 15 $\mu$m or less, a thickness change due to compression of 0.15 mm or less as the difference between the thickness at a planar pressure of 0.15 MPa and the thickness at a planar pressure of 1.0 MPa, and a tensile strength of 0.7 kgf/cm or more.

(22) A carbon fiber nonwoven fabric, according to any one of items (5) through (21), wherein the carbon fibers are oriented also in the thickness direction of the nonwoven fabric.

(23) An electrode using the carbon fiber nonwoven fabric as set forth in any one of items (5) through (22).

(24) An electrode diffusion layer using the carbon fiber nonwoven fabric as set forth in any one of items (5) through (22).

(25) A fuel cell unit, characterized in that the electrode diffusion layer as set forth in item (24), a catalyst layer and a polymeric electrolyte membrane are disposed in layers.

(26) A fuel cell, comprising at least either of the electrode diffusion layer as set forth in item (24) and the fuel cell unit as set forth in item (25).

(27) A method for producing the oxidized acrylic fiber nonwoven fabric as set forth in any one of items (1) through (4), including the step of pressurizing a nonwoven fabric obtained by using oxidized acrylic fibers, at a temperature of 140°C or higher and at a linear pressure of 5 to 200 kgf/cm in the thickness direction using a continuous press.

(28) A method for producing the carbon fiber nonwoven fabric as set forth in any one of items (5) through (22), comprising the steps of pressurizing a nonwoven fabric obtained by using oxidized acrylic fibers, at a temperature of 140°C or higher and at a linear pressure of 5 to 200 kgf/cm in the thickness direction, and carbonizing the oxidized acrylic fiber nonwoven fabric.

(29) A method for producing the oxidized acrylic fiber nonwoven fabric as set forth in any one of items (1) through (4), including the step of pressurizing a nonwoven fabric obtained by using oxidized acrylic fibers, at 140 to 300°C and at 0.5 to 40 MPa for 30 seconds or more by a continuous method.

(30) A method for producing the carbon fiber nonwoven fabric as set forth in any one of items (5) through (22), comprising the steps of pressurizing a nonwoven fabric obtained by using oxidized acrylic fibers, at 140 to 300°C and at 0.5 to 40 MPa for 30 seconds or more by a continuous method, and carbonizing the oxidized acrylic fiber nonwoven fabric.

(31) A method for producing the oxidized acrylic fiber nonwoven fabric as set forth in any one of items (1) through (4), comprising the steps of pressurizing a nonwoven fabric obtained by using oxidized acrylic fibers, at a temperature of 140°C or higher and at a linear pressure of 5 to 200 kgf/cm in the thickness direction by a continuous method, and pressurizing at 140 to 300°C and at a planar pressure of 0.05 to 40 MPa for 10 seconds or more by a continuous method.

(32) A method for producing the carbon fiber nonwoven fabric as set forth in any one of items (5) through (22), comprising the steps of obtaining a nonwoven fabric using oxidized acrylic fibers, subsequently pressurizing at a temperature of 140°C or higher and at a linear pressure of 5 to 200 kgf/cm in the thickness direction by a continuous method, and pressurizing at 140 to 300°C and at a planar pressure of 0.05 to 40 MPa for 10 seconds or more by a continuous method.

(33) A method for producing an oxidized acrylic fiber nonwoven fabric, according to item (29) or (31), wherein the pressurization using a planar pressure by a continuous method is performed by a method comprising combination of an intermittent material carrying and a flat plate press.

(34) A method for producing a carbon fiber nonwoven fabric, according to item ('30) or (32), wherein the pressurization using a planar pressure by a continuous method is performed by a method comprising combination of an intermittent material carrying and a flat plate press.

In the invention, a denseness of the oxidized acrylic fiber nonwoven fabric is compared with the conventional oxidized acrylic fiber nonwoven fabric particularly in reference to the property values stated in item (1).

In the invention, a denseness of the carbon fiber nonwoven fabric is compared with the conventional carbon fiber nonwoven fabric particularly in reference to the property values stated in item (5).

The definitions and/or measuring methods of the respective property values concerning nonwoven fabrics are as follows.

The weight of a nonwoven fabric is measured in the standard condition described in JIS L 0105.

The weight per square-meter of a nonwoven fabric is calculated by measuring the weight and area of a nonwoven fabric and dividing the weight by the area. The number of measurement times (the number n) is 1.

For the thickness of a nonwoven fabric, the nonwoven fabric is placed on a smooth table, and a micrometer indenter having a diameter of 5 mm is lowered from above to measure the thickness at a planar pressure of 0.15 MPa. The number n is 5. The thickness refers to the mean value obtained by dividing the sum of all the measured values by the number of measurement times. Hereinafter, in the measurement of two or more measurement times (the number n is 2 or more), the mean value obtained by dividing the sum of all the measured values by the number of measurement times is simply called the mean value of the respective measured values.

The density of a nonwoven fabric is obtained by calculation from the weight per square-meter of the nonwoven fabric and the thickness of the nonwoven fabric.

The thickness change due to compression of a nonwoven fabric is the difference between the thickness at a planar pressure of 0.15 MPa and the thickness at a planar pressure of 1.0 MPa. The number n is 5. The thickness change due to compression is the mean value of the respective measured values.

The surface roughness Ra of a nonwoven fabric is measured based on the method described in JIS B 0601. The measurement is performed in the longitudinal and transverse directions once each. The surface roughness Ra is the mean value of the respective measured values.

The tensile strength of a nonwoven fabric is measured at a stress rate of 2 to 4 mm/min using a specimen having a width of 1.5 cm and a span length of 30 mm. The tensile strength is calculated by dividing the measured maximum load by the width of the specimen. The number n is 2. The tensile strength is the mean value of the respective measured values.

The maximum fracture radius of a nonwoven fabric is the maximum radius among the radii of the cylinders around which the nonwoven fabric is wound by more than one half and fractured. Fracture means that unrecoverable fracture such as cracking or breaking occurring in the nonwoven fabric can be observed with eyes.

The maximum fracture radius of a nonwoven fabric is measured according to the following method. Cylinders of 5, 10, 15, 20, 25 and 30 mm in radius are prepared, and a nonwoven fabric cut to have a width of 20 mm and a length of 100 mm is wound around each cylinder by more than one half in the circumferential direction. The maximum radius at which unrecoverable fracture such as cracking or breaking is observed with eyes in the nonwoven fabric is the maximum fracture radius. It is preferred that the nonwoven fabric wound at least in the longitudinal direction or in the transverse direction satisfies the range. In the case of a continuous and long nonwoven fabric, it is preferred that the nonwoven fabric wound at least in the longitudinal direction satisfies the range. The number n is 2. The maximum fracture radius is the mean value of the respective measured values.

The pore size of a nonwoven fabric is the peak size in the pore size distribution obtained by the method of mercury porosimetry. In the case where there are plural peaks, the highest peak size is selected. The number n is 1.

The modulus of elasticity in flexure of a nonwoven fabric is measured according to JIS K 7074. In this case, the distance between supporting points is 15 mm; the radius of the indenter tip, 3 mm; the radius of each supporting point, 3 mm; the width of the specimen, 10 to 15 mm; the length of the specimen is 20 mm or more; and the test speed, 1 mm/min. The thickness of the specimen is the thickness of the nonwoven fabric, and is not specially adjusted. The number n is 2. The modulus of elasticity in flexure is the mean value of the respective measured values.

The differential pressure occurring when air of 14 cm/sec is permeated through a nonwoven fabric in the thickness direction is obtained by measuring the difference between the air pressure upstream of the nonwoven fabric and the air pressure downstream when air of 14 cm$^3$/(cm$^2$·sec) = 14 cm/sec is permeated through the nonwoven fabric in the thickness direction. The number n is 1.

The electric resistance of a nonwoven fabric in the thickness direction is measured as follows. Two gold-plated stainless steel blocks, each having a current terminal and a voltage terminal, are prepared. A nonwoven fabric cut to a size of 20 mm x 25 mm (sample) is held between the two gold-plated stainless steel blocks, and pressurization is performed to apply a pressure of 1 MPa to the sample. In this case, the voltage terminals should be kept near the faces holding the sample, and the current terminals should be kept near the faces opposite to the faces holding the sample. A current of 1 A is made to flow between the current terminals, and the voltage V (V) is measured between the voltage terminals. The resistance value is calculated from the following formula (I). The number n is 1.

$$\text{Electric resistance (m}\Omega\cdot\text{cm}^2) = V \times 2 \times 2.5 \times 1,000 \tag{I}$$

THE BEST MODES FOR CARRYING OUT THE INVENTION

The oxidized acrylic fiber nonwoven fabric of the invention is described below in further detail.

The oxidized acrylic fibers can be obtained by heating acrylic fibers at 200 to 300°C in air. The oxidized acrylic fibers are commercially available. Examples of the fibers include Pyromex (registered trademark) produced by Toho Tenax Co., Ltd. and Lastan (registered trademark) produced by Asahi Kasei Corp. Oxidized acrylic fibers are high in flame resistance, heat resistance and chemicals resistance and are not burned or melted in air.

It is also known that oxidized acrylic fibers are used to produce a nonwoven fabric. There is a dry method in which short oxidized acrylic fibers are carded to produce a nonwoven fabric. There is also a wet method in which short oxidized acrylic fibers are dispersed in water and the dispersion is dewatered through a wire cloth screen to produce a nonwoven fabric.

In the case of the wet method, to enhance the strength of the nonwoven fabric, water jet entanglement treatment or needle punching treatment may be performed to entangle the fibers. Furthermore, for a similar purpose, a binder may be added to the nonwoven fabric to bind fibers to each other.

Also in the case of the dry method, similarly, water jet entanglement or needle punching may be used as treatment to entangle the fibers, or a binder may be added to bind the fibers to each other.

The dry method is more preferred to the wet method, since it is easier to enhance the tensile strength of the obtained nonwoven fabric.

As a further other method for obtaining an oxidized acrylic fiber nonwoven fabric, there is a method in which an acrylic fiber nonwoven fabric formed of acrylic fibers is treated to be resistant against flames for producing an oxidized acrylic fiber nonwoven fabric. In view of the efficiency in obtaining flame resistance, the above-mentioned method of transforming oxidized acrylic fibers into a nonwoven fabric is preferred.

There is a case where the oxidized acrylic fiber nonwoven fabric contains a resin intended for bonding such as acrylic resin, polyvinyl alcohol, polyvinyl acetate or phenolic resin. For use in any application requiring heat insulation, it is preferred that the resin content is 10 wt% or less. More preferred is 5 wt% or less, and further more preferred is 2 wt% or less. It is most preferred that the amount of the resin intended for bonding is 0 wt%, that is, the resin is not contained. If the resin content is too large, the heat resistance of the nonwoven fabric declines.

To obtain a thin, dense and stronger nonwoven fabric, a nonwoven fabric comprising oxidized acrylic fibers and acrylic fibers mixed is used. In the case where the nonwoven fabric is used in any application requiring heat insulation, it is preferred that the contained amount of the acrylic fibers is 10 wt% or less. More preferred is 5 wt % or less, and further more preferred is 2 wt% or less. If the contained amount of the acrylic fibers is too large, the heat resistance of the nonwoven fabric declines.

The weight per square-meter of the oxidized acrylic fiber nonwoven fabric is from 70 to 190 g/m$^2$. A preferred range is from 100 to 160 g/m$^2$, and a more preferred range is from 120 to 140 g/m$^2$. If the weight per square-meter is too low, it is difficult to enhance the tensile strength of the nonwoven fabric. If the weight per square-meter is too high, it is difficult to obtain a nonwoven fabric having a small thickness (thin nonwoven fabric).

The thickness of the oxidized acrylic fiber nonwoven fabric is from 0.1 to 0.3 mm. A preferred range is from 0.15 to 0.25 mm.

If the thickness of the oxidized acrylic fiber nonwoven fabric is too large, a thin and dense nonwoven fabric intended in the invention cannot be obtained, and while it is stored or used, it becomes bulky. If the thickness is too small, flame-proof function and heat insulation function become insufficient.

The density of the oxidized acrylic fiber nonwoven fabric is from 0.35 to 0.8 g/cm$^3$. A preferred range is from 0.45 to 0.7 g/cm$^3$, and a more preferred range is from 0.5 to 0.65 g/cm$^3$. If the density is too low, the nonwoven fabric is too bulky, and a thin and dense nonwoven fabric intended in the invention cannot be obtained.

It is preferred that the thickness change due to compression of the oxidized acrylic fiber nonwoven fabric is 0.15 mm or less. More preferred is 0.11 mm or less, and further more preferred is 0.09 mm or less. If the thickness change is too large, the nonwoven fabric is not sufficiently densified.

If the oxidized acrylic fibers are oriented also in the thickness direction of the nonwoven fabric, the tensile strength of the nonwoven fabric can be enhanced. Methods for making the oxidized fibers oriented also in the thickness direction include a method using water jet entanglement, a method using needle punching, etc. A method using water jet entanglement is preferred since the generation of oxidized fiber powder and the strength decline respectively caused by fiber breaking little occur.

Being substantially formed of oxidized acrylic fibers only means that the nonwoven fabric is substantially formed of oxidized acrylic fibers only, and does not substantially contain a resin intended for bonding such as acrylic resin, polyvinyl alcohol, polyvinyl acetate or phenolic resin. It can happen that the nonwoven fabric contains the oil, dispersing agent or the like to be used for forming the nonwoven fabric. It is preferred that the contained amount of the other ingredients than the oxidized acrylic fibers in the nonwoven fabric is 5 wt% or less. More preferred is 2 wt% or less. That is, the amount of the oxidized acrylic fibers in the nonwoven fabric is preferably 95 wt% or more, more preferably 98 wt% or more, further more preferably 99 wt% or more. If the contained amount of the ingredients other than the oxidized acrylic fibers is too large, the heat resistance of the nonwoven fabric may decline. The above-mentioned amounts are calculated under excluding the water such as moisture absorbed by the oxidized acrylic fibers and the resin.

Next, the carbon fiber nonwoven fabric of the invention is described in further detail.

Carbon fibers mean fibrous carbon, and it is preferred that their raw material is acrylic fibers, pitch-based fibers, rayon fibers or phenolic fibers, since the fibers are less likely to be fractured. Acrylic fibers, rayon fibers or phenolic fibers are more preferred, and acrylic fibers are especially preferred.

A nonwoven fabric formed of carbon fibers can be obtained by carbonizing the aforesaid oxidized acrylic fiber nonwoven fabric or by transforming carbon fibers into a nonwoven fabric. It is difficult to transform carbon fibers into a nonwoven fabric by a dry method. Even if a nonwoven fabric is formed by a wet method, it is difficult to entangle the carbon fibers and a binder for binding the carbon fibers to each other is necessary. Therefore, a carbon fiber nonwoven fabric obtained by carbonizing an oxidized acrylic fiber nonwoven fabric is preferred.

The carbonization temperature of the oxidized acrylic fiber nonwoven fabric is preferably from 1,000 to 2,500°C, more preferably 1,500 to 2,200°C, and further more preferably 1,700 to 2,000°C. If the temperature is less than 1,000°C, the electric resistance is high, and the oxidative deterioration in the cell is likely to occur. If the temperature is higher than 2,500°C, the exhaustion of the carbonization furnace heater and the heat insulating material and energy consumption increase. The carbonization is performed in an inert gas atmosphere such as nitrogen or argon or in vacuum.

The oxidized acrylic fiber nonwoven fabric may be made to contain a small amount of a resin such as phenolic resin, polyvinyl alcohol or carboxymethyl cellulose. However, in this case, the carbonized resin causes the carbon fibers to be bound to each other, and after completion of carbonization, there arises a problem that the nonwoven fabric becomes fragile and cannot be wound or may be chipped. Furthermore, since the amount of the carbonized resin is small, there arises a problem that it is fractured by compression and that even if the pressure is released, the thickness is not recovered. Therefore, irrespectively of the residual weight percent of the carbonized resin, it is preferred that no resin is contained. Even if the resin is contained, it is preferred that the resin content is 1 wt% or less. More preferred is 0.1 wt% or less, and further more preferred is 0.05 wt% or less.

The weight per square-meter of the carbon fiber nonwoven fabric is from 50 to 150 g/m$^2$. A preferred range is from 60 to 110 g/m$^2$, and a more preferred range is from 70 to 95 g/m$^2$. If the weight per square-meter is too high, the thickness becomes large, and in the case where the nonwoven fabric is used as an electrode diffusion layer of a fuel cell, there arises problem that the electric resistance becomes high. Furthermore, there arises another problem that the cell size becomes large. If the weight per square-meter is too low, there arises a problem that the tensile strength of the carbon fiber nonwoven fabric declines. Furthermore, in the case where the nonwoven fabric is used as an electrode diffusion layer of a fuel cell, there arises a problem that the diffusion of the fluid in the in-plane direction of the nonwoven fabric becomes insufficient.

The thickness of the carbon fiber nonwoven fabric is from 0.1 to 0.25 mm. A preferred range is from 0.13 to 0.22 mm, and a more preferred range is from 0.15 to 0.20 mm. If the thickness is too large in the case where the nonwoven fabric is used as an electrode diffusion layer of a fuel cell, there arises a problem that the electric resistance becomes high. Furthermore, there arises another problem that the cell size becomes large. If the thickness is too small, there arises a problem that the strength of the carbon fiber nonwoven fabric becomes low. Furthermore, in the case where the nonwoven fabric is used as an electrode diffusion layer of a fuel cell, there arises a problem that the diffusion of the fluid in the in-plane direction of the nonwoven fabric becomes insufficient.

The density of the carbon fiber nonwoven fabric is from 0.3 to 0.7 g/cm$^3$. A preferred range is from 0.4 to 0.6 g/cm$^3$, and a more preferred range is from 0.5 to 0.6 g/cm$^3$. If the density is too low in the case where the nonwoven fabric is used as an electrode diffusion layer of a fuel cell, there arise such problems that the electric resistance is low, that it is difficult to coat the surface with a catalyst or carbon layer, that the crushing by compression becomes large, and that thickness is likely to be small with the lapse of time due to the cell clamping pressure, lowering the clamping pressure and causing dimensional change. Furthermore, there arise such problems that the pore size becomes large and that the cell characteristics decline since the electrolyte membrane is dried. If the density the nonwoven fabric has too in the case where it is used as an electrode diffusion layer of a fuel cell, there arises a problem that the diffusibility becomes insufficient and water clogging is likely to occur, lowering the cell characteristics.

The surface roughness Ra of the carbon fiber nonwoven fabric is 30 μm or less. Preferred is 20 μm or less, and more preferred is 15 μm or less. Further more preferred is 10 μm or less. If it is attempted to obtain a nonwoven fabric having a surface roughness Ra of less than 3 μm, it is necessary to reduce the fiber diameter, to use a large amount of a resin and to impregnate carbon particles. However, the obtained nonwoven fabric is not preferred as an electrode substrate. Therefore, it is preferred that the surface roughness Ra is 3 μm or more.

If the surface roughness is too large in the case where the nonwoven fabric is coated on the surface with a catalyst layer or a carbon layer, there arises such problems that since it is difficult to coat uniformly, clearances are likely to be formed, and that the electrolyte membrane is likely to be short-circuited. It is preferred that at least one surface satisfies the above-mentioned range, and it is more preferred that both the surfaces satisfy the above-mentioned range. If the surface roughness of one surface is different from that of the other surface, it is preferred to use the nonwoven fabric having the surface smaller in surface roughness turned to face the electrolyte membrane in the fuel cell.

It is preferred that the tensile strength of the carbon fiber nonwoven fabric is 0.2 kgf/cm or more. More preferred is 0.5 kgf/cm or more, and further more preferred is 0.7 kgf/cm or more. To enhance the tensile strength of a nonwoven fabric, a special step of, for example, impregnating a large amount of a resin is usually necessary, but it is not preferred that a large amount of a resin exists in the nonwoven fabric. Therefore, it is preferred that the tensile strength of the carbon fiber nonwoven fabric is 10 kgf/cm or less. It is only required that the tensile strength satisfies the aforesaid value at least in one direction. In the case of a continuous and long nonwoven fabric, it is only required that the tensile strength in the longitudinal direction satisfies the aforesaid value. If the tensile strength is too low, the tension acting on the carbon fiber nonwoven fabric while the nonwoven fabric is additionally treated, for example, treated to be water-repellent or coated with a carbon layer can cause the carbon fiber nonwoven fabric to be fractured.

It is preferred that the maximum fracture radius of the carbon fiber nonwoven fabric is 20 mm or less. More preferred is 15 mm or less, and further more preferred is 10 mm or less. Furthermore, it is preferred that the maximum fracture radius is 0 mm or more. A maximum fracture radius of 0 mm means a state where the nonwoven fabric is folded in double. If the maximum fracture radius is too large, the bending acting when the carbon fiber nonwoven fabric is additionally treated is likely to cause the nonwoven fabric to be fractured. Even in the case where the nonwoven fabric is not actually wound at such a small radius, if the maximum fracture radius is too small, no tension acts on the nonwoven fabric while it undergoes an additional treatment such as water repellence treatment or carbon layer coating or while it is processed in an additional treatment device, and even if the nonwoven fabric is locally loosened at a large curvature, it is unlikely to be fractured.

Being substantially formed of carbon fibers only means that the nonwoven fabric is substantially formed of carbon fibers only, and does not contain a resin used for binding the carbon fibers to each other or a carbonized resin, etc. Particularly, it is preferred that the amount of the carbon fibers contained in the nonwoven fabric is preferably 99 wt% or more. More preferred is 99.9 wt% or more, and further more preferred is 99.95 wt% or more.

The weight of the carbon fibers and the carbonized resin is obtained by calculation from the weight of the carbon fiber precursor fibers and the resin in the nonwoven fabric not yet carbonized, the weight loss caused when the carbon fiber precursor fibers only are carbonized, and the weight loss caused when the resin only is carbonized.

In the case where the carbon fibers are bound to each other by a resin, there arise such problems as the increase of electric resistance and the life shortening of electrodes. Furthermore, in the case where the carbon fibers are bound to each other by a carbonized resin, the flexibility declines, and the maximum fracture radius becomes large, causing the nonwoven fabric to be fractured in such additional treatments as water repellence treatment, carbon layer coating and bonding to the electrolyte membrane.

It is preferred that the pore size of the carbon fiber nonwoven fabric is from 10 to 60 μm. A more preferred range is from 15 to 50 μm, and a further more preferred range is from 20 to 40 μm. If the pore size is too small, the gas permeability is low, and water clogging is likely to occur. So, the cell voltage becomes low. If the pore size is too large, the gas permeability is high and the electrolyte membrane is dried to lower the cell voltage.

It is preferred that the thickness change due to compression of the carbon fiber nonwoven fabric is 0.15 mm or less. More preferred is 0.1 mm or less, and further more preferred is 0.06 mm or less. Furthermore, it is preferred that the thickness change is 0 mm. If the thickness change due to compression is too large, it is difficult to coat the nonwoven fabric on the surface with a carbon layer. Furthermore, when the nonwoven fabric is used as an electrode diffusion layer of a fuel cell, there arise such problems that the gas passage of the separator is clogged, that the thickness of the fuel cell is not likely to be constant, and that the fuel cell clamping pressure declines with the lapse of time.

The thickness change due to compression of the carbon fiber nonwoven fabric is as defined for the abovementioned thickness change due to compression of a nonwoven fabric. The planar pressure of 1.0 MPa in the definition corresponds to the clamping pressure of a fuel cell stack.

It is preferred that the compression rate calculated from the following formula (II) based on the value between the thickness t (0.15) at a planar pressure of 0.15 MPa and the thickness t (1.0) at a planar pressure of 1.0 MPa is 40% or less. More preferred is 30% or less, and further more preferred is 20% or less.

$$\text{Compression rate (\%)} = \{t(0.15) - t(1.0)\}/t(0.15) \times 100 \qquad (II)$$

Like the thickness change due to compression, if the compression rate is too large, there arises a problem that the gas passage of the separator is clogged. Furthermore, since the thickness is greatly changed by the fuel cell clamping pressure, there arise such problems that the height of the fuel cell is unlikely to be constant and further that the fuel cell clamping pressure declines with the lapse of time.

It is preferred that the modulus of elasticity in flexure of the carbon fiber nonwoven fabric is 0.1 GPa or more. More preferred is 0.3 GPa or more, and further more preferred is 0.6 GPa or more. Moreover, it is preferred that the modulus of elasticity in flexure is 25 GPa or less. More preferred is 15 GPa or less, and further more preferred is 10 GPa or less. If the modulus of elasticity in flexure is too high, it becomes difficult to wind, and when bended, the nonwoven fabric is likely to be fractured.

If the carbon fiber nonwoven fabric has such a high modulus of elasticity in flexure, it is good in both flexibility and stiffness, though this is impossible to achieve in the conventional nonwoven fabric or carbon paper.

If the modulus of elasticity in flexure is too low, the electrode diffusion layer is likely to protrude into the gas passage of the separator, to narrow the passage. Also in such additional treatment as water repellence treatment or carbon layer coating, a high modulus of elasticity in flexure allows easy traveling or coating. Depending on the gas passage pattern, it is preferred that the modulus of elasticity in flexure at least in one direction satisfies the aforesaid value, and in the case of a long continuous substrate, it is preferred that the modulus of elasticity in flexure in the longitudinal direction satisfies the aforesaid value. It is more preferred that the values of modulus of elasticity in flexure in both the longitudinal and traverse directions satisfy the aforesaid value. In the case where the modulus of elasticity in flexure in one direction only is high, the nonwoven fabric has high processability, and furthermore, if the gas passage of the separator is arranged to be perpendicular to the direction in which the modulus of elasticity in flexure is high, the effect of improving the passage narrowing can be further enhanced. In the case where the values of modulus of elasticity in flexure in the two directions are high, the nonwoven fabric of course has high processability, and the passage narrowing can be improved irrespectively of the direction in which the gas passage pattern of the separator is arranged. As the modulus of elasticity in flexure, the value obtained after additional treatment such as water repellence treatment is further important.

It is preferred that the differential pressure occurring when air of 14 cm/sec is permeated through the carbon fiber nonwoven fabric in the thickness direction is from 1 to 10 mm Aq. A more preferred range is from 2 to 7 mm Aq, and a further more preferred range is from 3.5 to 7 mm Aq. If the differential pressure is too large, the permeability of air, hydrogen and water is low and water clogging is likely to occur, lowering the cell voltage. If the differential pressure is too small, water is likely to dry up for drying the electrolyte membrane, thus increasing the resistance and lowering the cell voltage.

The differential pressure occurring when air of 14 cm/sec is permeated through the carbon fiber nonwoven fabric in the thickness direction can be converted into permeability using the following formula (III).

$$\text{Permeability (ml/cm}^2\text{/hr/mm Aq)} =$$

$$50{,}400 \div \text{Differential pressure (mm Aq)} \qquad (III)$$

It is preferred that the electric resistance of the carbon fiber nonwoven fabric in the thickness direction is 15 $m\Omega \cdot cm^2$ or less. More preferred is 10 $m\Omega \cdot cm^2$ or less, and further more preferred is 8 $m\Omega \cdot cm^2$ or less. If it is attempted to obtain an electric resistance of less than 1 $m\Omega \cdot cm^2$, such special steps as pressurization at a high pressure, carbonization at a high temperature and binding by means of carbon are necessary. So, it is preferred that the electric resistance is 1 mΩ·cm$^2$ or more.

The electric resistance of the electrode diffusion layer directly relates to the voltage drop of the cell. For example, in the case where a cell using electrode diffusion layers of 20 mΩ·cm$^2$ in the fuel electrode and the air electrode is used to generate at 1 A/cm$^2$, the voltage drops by 20 mV compared with the case where electrode diffusion layers of 10 mΩ·cm$^2$ are used, and if the cell voltage is 0.5 V, an efficiency drop of about 4% occurs. In the case where water repellence treatment is performed, since the resistance value often increases, the efficiency drop further increases.

A carbon fiber nonwoven fabric satisfying the following requirements (a) through (k) was produced. The carbon fiber nonwoven fabric was found to be excellent in the following properties (i) through (iv) as a material used for forming the electrode diffusion layers of a fuel cell. Hitherto, a carbon fiber nonwoven fabric satisfying the requirements (a) through (k) has never been known.

(a) The weight per square-meter is from 60 to 110 g/m$^2$,
(b) the thickness is from 0.13 to 0.22 mm,
(c) the density is 0.4 to 0.7 g/cm$^2$,
(d) the maximum fracture radius is 20 mm or less,
(e) the surface roughness Ra is 20 µm or less,
(f) the thickness change due to compression as the difference between the thickness at a planar pressure of 0.15 MPa and the thickness at a planar pressure of 1.0 MPa is 0.1 mm or less,
(g) the tensile strength is 0.5 kgf/cm or more,
(h) the modulus of elasticity in flexure is 0.1 GPa or more,
(i) the peak size in the pore size distribution is from 15 to 50 µm,
(j) the electric resistance in the thickness direction is 15 mΩ·cm$^2$ or less, and
(k) the differential pressure occurring when air of 14 cm/sec is permeated through the nonwoven fabric in the thickness direction is from 2 to 7 mm Aq.

(i) Mass transfer, i.e., gas supply and water discharge (weight per square-meter, thickness, density, pore size, differential pressure),
(ii) electric conductivity, i.e., voltage drop due to electric resistance (electric resistance),
(iii) shape stability, i.e., preventing the passage narrowing of separator, preventing the crushing of nonwoven fabric with the lapse of time, and preventing the short-circuiting of electrolyte membrane (surface roughness, thickness change due to compression, modulus of elasticity in flexure), and
(iv) high processability, i.e., enduring continuous processing, higher processing speed (maximum fracture radius, tensile strength, modulus of elasticity in flexure).

It is preferred that this carbon fiber nonwoven fabric satisfies the following requirements (a-1) through (k-1). That is, (a-1) the weight per square-meter is from 70 to 95 g/m$^2$, (b-1) the thickness is from 0.15 to 0.20 mm, (c-1) the density is from 0.45 to 0.6 g/cm$^2$, (d-1) the maximum fracture radius is 20 mm or less, (e-1) the surface roughness Ra is 15 µm or less, (f-1) the thickness change due to compression as the difference between the thickness at a planar pressure of 0.15 MPa and the thickness at a planar pressure of 1.0 MPa is 0.05 mm or less, (g-1) the tensile strength is 0.7 kgf/cm or more, (h-1) the modulus of elasticity in flexure is 0.3 GPa or more, (i-1) the peak size in the pore size distribution is from 20 to 40 µm, (j-1) the electric resistance in the thickness direction is 10 mΩ·cm$^2$ or less, and (k-1) the differential pressure occurring when air of 14 cm/sec is permeated through the nonwoven fabric in the thickness direction is 2 to 7 mm Aq.

For the purposes of enhancing the electric conductivity of the carbon fiber nonwoven fabric, reducing the surface roughness, reducing the thickness change due to compression, and controlling the water permeability as an electrode diffusion layer of a fuel cell, it is preferred that carbon black is contained on the surface of and/or inside the nonwoven fabric, i.e., on the surface or inside, or both on the surface and inside. Especially depositing carbon black, fullerene or carbon nanotubes in layers on the surface is preferred since it is very effective for reducing the surface roughness and preventing the drying of the electrolyte membrane.

It is preferred that the deposited amount of carbon black is from 3 to 25 g/m$^2$. The carbon black adding method is not especially limited, but for example, a method of using a resin or the like as an adhesive for binding carbon black to the nonwoven fabric can be preferably used.

It is a preferred mode that the carbon fiber nonwoven fabric of the invention contains a water-repellent substance for the purpose of preventing water clogging when it is used in a fuel cell. Furthermore, a water-repellent substance can also be used as the adhesive of carbon black. A water-repellent substance is a substance having a contact angle to water of 90° or more, and for example, a fluorine-containing compound, silicon-containing compound or the like can be preferably used. In view of water repellency and durability, a fluoroplastic is preferred.

EP 1 548 164 A1

Next, the carbon fiber nonwoven fabric formed of carbon fibers and a water-repellent substance of the invention is explained.

In the carbon fiber nonwoven fabric formed of carbon fibers and a water-repellent substance, the water-repellent substance is preferably a fluoroplastic in view of water-repellent performance and durability. Especially polytetrafluoroethylene (PTFE) is preferred.

It is preferred that the deposited amount of the water-repellent substance is from 3 to 30 wt%, and a more preferred range is from 6 to 25 wt%. If the amount of the water-repellent substance is too small, water clogging is likely to occur, and if it is too large, the electric resistance becomes high.

The method for depositing the water-repellent substance on the carbon fiber nonwoven fabric is not especially limited. For uniform deposition, a method, in which a liquid having the water-repellent substance dissolved or dispersed is impregnated into the carbon fiber nonwoven fabric and is dried, is preferred.

In the case where a fluoroplastic is used, it is preferred to heat-treat at a temperature between the melting point of the fluoroplastic and 400°C after completion of drying. It is preferred to heat and pressurize further after completion of the heat treatment. The heating and pressurization can densify the nonwoven fabric and can smooth the surface. In the case of a fluoroplastic, the heating and pressurizing temperature is from 50 to 400°C, preferably 100°C to the melting point. The thermal deformation temperature of a fluoroplastic such as PTFE, tetrafluoroethylene-perfluoroalkyl vinyl ether copolymer (PFA) or tetrafluoroethylene-hexafluoropropylene copolymer resin (FEP) at a pressurization pressure of 1.81 MPa is often about 50°C, and heating and pressurization at a temperature lower than 50°C does not give a sufficient effect.

In the case of pressurization by a planar pressure, it is preferred that the pressure of the heating and pressurization is from 0.1 to 10 MPa, and a more preferred range is from 0.5 to 5 MPa. In the case of pressurization by a linear pressure using, for example, a roll press, it is preferred that the pressure of the heating and pressurization is from 0.1 to 500 kgf/cm. A more preferred range is from 0.5 to 100 kgf/cm.

In the case where the linear pressure is 1 kgf/cm or more, it is preferred to form a clearance corresponding to 20 to 90% of the thickness of the nonwoven fabric not yet pressed, between pressurizing bodies such as rolls, for preventing the fracture of the nonwoven fabric caused by the pressure. It is also preferred to use an elastic material such as a rubber or any other elastomer, paper or organic fibers as the material of at least either of the pressurizing bodies such as rolls, for preventing the fracture of the nonwoven fabric.

The heating and pressurization step can also include a step of bonding an electrolyte membrane or catalyst layer to the nonwoven fabric used as an electrode diffusion layer, or a step of coating the nonwoven fabric with a carbon layer, or a step of smoothing the surface after carbon layer coating.

The weight per square-meter of the nonwoven fabric formed of carbon fibers and a water-repellent substance is from 60 to 180 $g/m^2$. A preferred range is from 70 to 130 $g/m^2$, and a more preferred range is from 80 to 110 $g/m^2$. If the weight per square-meter is too high, the thickness becomes large, and in the case where the nonwoven fabric is used as an electrode diffusion layer of a fuel cell, there arise such problems that the electric resistance is high and that the cell size is large. If the weight per square-meter is too low, the tensile strength of the carbon fiber nonwoven fabric becomes low, and in the case where the nonwoven fabric is used as an electrode diffusion layer of a fuel cell, there arises such a problem that the diffusion of the fluid in the in-plane direction of the nonwoven fabric becomes insufficient.

The thickness of the nonwoven fabric formed of carbon fibers and a water-repellent substance is from 0.1 to 0.25 mm. A preferred range is from 0.13 to 0.22 mm, and a more preferred range is from 0.15 to 0.20 mm. If the thickness is too large in the case where the nonwoven fabric is used as an electrode diffusion layer of a fuel cell, there arise such problems that the electric resistance is high and that the cell size is large. If the thickness is too small, the strength of the carbon fiber nonwoven fabric becomes low, and in the case where the nonwoven fabric is used as an electrode diffusion layer of a fuel cell, there arises such a problem that the diffusion in the in-plane direction of the nonwoven fabric is insufficient, since the thickness is too small.

The density of the nonwoven fabric formed of carbon fibers and a water-repellent substance is from 0.35 to 0.9 $g/cm^3$. A preferred range is from 0.45 to 0.7 $g/cm^3$, and a more preferred range is from 0.5 to 0.65 $g/cm^3$. If the density is too low in the case where the nonwoven fabric is used as an electrode diffusion layer of a fuel cell, there arise such problems that the electric resistance is low, that it becomes difficult to coat the surface with a catalyst or carbon layer, that the nonwoven fabric is crushed greatly by compression, and that it is likely to be thin with the lapse of time due to the cell clamping pressure, causing clamping pressure drop and dimensional change. Furthermore, if the pore size becomes too large, there arises such a problem that since the electrolyte membrane is dried, the cell characteristics decline. A nonwoven fabric having high density is difficult to produce and is costly, and furthermore, when it is used as an electrode diffusion layer of a fuel cell, there arises such a problem that water clogging is likely to occur due to insufficient diffusibility, lowering the cell characteristics.

It is preferred that the pore size of the nonwoven fabric formed of carbon fibers and a water-repellent substance is from 10 to 60 μm. A more preferred range is from 15 to 50 μm, and a further more preferred range is from 20 to 40

μm. If the pore size is too small, the gas permeability becomes low and water clogging is liable to occur, lowering the cell voltage. If the pore size is too large, the gas permeability is also high and the electrolyte membrane is dried to lower the cell voltage.

The surface roughness Ra of the nonwoven fabric formed of carbon fibers and a water-repellent substance is 25 μm or less. Preferred is 15 μm or less, and more preferred is 10 μm or less. Moreover, it is preferred that the surface roughness Ra is 3 μm or more. If the surface roughness is too large, there arise such problems that when the nonwoven fabric is coated on the surface with a catalyst layer or carbon layer, it is difficult to uniformly coat, that clearances are likely to be formed, and that the electrolyte membrane is likely to be short-circuited.

It is preferred that the surface roughness Ra of the nonwoven fabric satisfies the aforesaid range at least on one surface of the nonwoven fabric, and it is more preferred that the surface roughness Ra satisfies the aforesaid range on both the surfaces. In the case where the surface roughness of one surface is different from that on the other, it is preferred to use the nonwoven fabric having the surface smaller in the surface roughness turned to face the electrolyte membrane in the fuel cell.

It is preferred that the maximum fracture radius of the nonwoven fabric formed of carbon fibers and a water-repellent substance is 20 mm or less. More preferred is 15 mm or less, and further more preferred is 10 mm or less. Furthermore, it is preferred that the maximum fracture radius is 0 mm or more. The maximum fracture radius being 0 mm means a state where the nonwoven fabric is folded in double. If the maximum fracture radius is too large, the bending acting when the carbon fiber nonwoven fabric is additionally treated is likely to cause the carbon fiber nonwoven fabric to be fractured. Even in the case where the nonwoven fabric is not actually wound at such a small radius, if the maximum fracture radius is too small, no tension acts on the nonwoven fabric while it undergoes an additional treatment such as water repellence treatment or carbon layer coating or while it is processed in an additional treatment device, and even if the nonwoven fabric is locally loosened at a large curvature, it is unlikely to be fractured.

It is preferred that the modulus of elasticity in flexure of the nonwoven fabric formed of carbon fibers and a water-repellent substance is 0.5 GPa or more. More preferred is 1 GPa or more, and further more preferred is 1.5 GPa or more. Moreover, it is preferred that the modulus of elasticity in flexure is 25 GPa or less. More preferred is 15 GPa or less, and further more preferred is 10 GPa or less. If the modulus of elasticity in flexure is too high, it is difficult to wind the nonwoven fabric, and when the nonwoven fabric is bent, it is likely to be fractured.

The modulus of elasticity in flexure can be enhanced by letting the nonwoven fabric contain a water-repellent substance, using a fluoroplastic as the water-repellent substance, and carrying out the heating and pressurization. If the modulus of elasticity in flexure is too low, the electrode diffusion layer is likely to protrude into the gas passage of the separator, to narrow the passage. So, the nonwoven fabric formed of carbon fibers and a water-repellent substance is required to have a modulus of elasticity in flexure higher than that of the nonwoven fabric substantially formed of carbon fibers only. The additional treatment such as carbon layer coating is also easier when the modulus of elasticity in flexure is higher.

Depending on the gas passage pattern, it is preferred that the modulus of elasticity in flexure satisfies the aforesaid value at least in one direction, and in the case of a long continuous substrate, it is preferred that the modulus of elasticity in flexure in the longitudinal direction satisfies the aforesaid value. It is more preferred that the values of modulus of elasticity in flexure in both the longitudinal and traverse directions satisfy the aforesaid value. In the case where the modulus of elasticity in flexure in one direction only is high, the woven fabric has high processability, and furthermore if the gas passage of the separator is arranged to be perpendicular to the direction in which the modulus of elasticity in flexure is high, the effect of improving passage narrowing can be further enhanced. In the case where the values of modulus of elasticity in flexure in two directions are high, the nonwoven fabric of course has high processability, and the passage narrowing can be improved irrespectively of the gas passage pattern of the separator.

It is preferred that the thickness change due to compression of the nonwoven fabric formed of carbon fibers and a water-repellent substance is 0.15 mm or less. More preferred is 0.10 mm or less, and further more preferred is 0.06 mm or less. Moreover, it is preferred that the thickness change is 0 mm. If the thickness change due to compression is too large, it becomes difficult to coat the nonwoven fabric on the surface with a carbon layer. Furthermore, when the nonwoven fabric is used as an electrode diffusion layer of a fuel cell, there arise such problems that the gas passage of the separator is clogged, that the thickness of the fuel cell is unlikely to be constant, and that the fuel cell clamping pressure declines with the lapse of time.

It is preferred that the compression rate calculated from the aforesaid formula (II) based on the values of the thickness t (0.15) at a planar pressure of 0.15 MPa and the thickness t (1.0) at a planar pressure of 1.0 MPa of the nonwoven fabric formed of carbon fibers and a water-repellent substance is 40% or less. More preferred is 30% or less, and further more preferred is 20% or less.

Like the thickness change due to compression, if the compression rate is large, there arise such problems that the gas passage of the separator is clogged, that since the thickness changes greatly due to the fuel cell clamping pressure, the height of the fuel cell is unlikely to be constant, and that the fuel cell clamping pressure declines with the lapse of time.

It is preferred that the tensile strength of the nonwoven fabric formed of carbon fibers and a water-repellent substance is 0.7 kgf/cm or higher. More preferred is 1 kgf/cm or higher, and further more preferred is 1.2 kgf/cm or higher. Moreover, in order to obtain a nonwoven fabric with a tensile strength of higher than 10 kgf/cm, any special step such as increasing the water-repellent substance is necessary. Therefore, it is preferred that the tensile strength of the nonwoven fabric is 10 kgf/cm or lower.

It is only required that the tensile strength satisfies the aforesaid value at least in one direction. In the case of a continuous and long nonwoven fabric, it is only required that the tensile strength in the longitudinal direction satisfies the aforesaid value. If the tensile strength is too low, the tension acting during an additional treatment such as coating the carbon fiber nonwoven fabric having a carbon layer or bonding the carbon fiber nonwoven fabric to a catalyst layer or an electrolyte membrane causes the carbon fiber nonwoven fabric to be fractured. Water repellence treatment and carbon layer coating increase the weight per square-meter, and a carbon layer coating device applies a force. So, the nonwoven fabric formed of carbon fibers and a water-repellent substance is required to have a tensile strength higher than that of the nonwoven fabric formed of carbon fibers only.

It is preferred that the differential pressure occurring when air of 14 cm/sec is permeated through the nonwoven fabric formed of carbon fibers and a water-repellent substance in the thickness direction is from 2 to 12 mm Aq. A more preferred range is from 2 to 8 mm Aq, and a further more preferred range is from 3 to 7 mm Aq. In the case where the differential pressure is too large, since the permeability of air, hydrogen and water is low while water clogging is also likely to occur, the cell voltage declines. In the case where the differential pressure is too low, water is liable to dry up, and the membrane is dried to raise the resistance, hence lowering the cell voltage.

It is preferred that the electric resistance of the nonwoven fabric formed of carbon fibers and a water-repellent substance in the thickness direction is 30 m$\Omega \cdot$cm$^2$ or less. More preferred is 20 m$\Omega \cdot$cm$^2$ or less. To achieve an electric resistance of less than 2 m$\Omega \cdot$cm$^2$, special steps such as binding by means of carbon, pressurization at a high pressure and carbonizing at a high temperature are necessary. Therefore, it is preferred that the electric resistance is 2 m$\Omega \cdot$cm$^2$ or more. For lowering the electric resistance, it is preferred to carry out the above-mentioned heating and pressurization.

A nonwoven fabric formed of carbon fibers and a water-repellent substance, characterized in that (a) the weight per square-meter is from 70 to 130 g/m$^2$, (b) the thickness is from 0.13 to 0.22 mm, (c) the density is from 0.45 to 0.7 g/cm$^3$, (d) the surface roughness Ra is 15 $\mu$m or less, (e) the maximum fracture radius is 20 mm or less, (f) the thickness change due to compression as the difference between the thickness at a planar pressure of 0.15 MPa and the thickness at a planar pressure of 1.0 MPa is 0.1 mm or less, (g) the tensile strength is 1.0 kgf/cm or more, (h) the modulus of elasticity in flexure is 1.0 GPa or more, and (i) the differential pressure occurring when air of 14 cm/sec is permeated through the nonwoven fabric in the thickness direction is from 2 to 8 mm Aq, is excellent in the following (i) through (iv) as a nonwoven fabric for an electrode diffusion layer of a fuel cell.

( i ) Mass transfer, i.e., gas supply and water discharge (weight per square-meter, thickness, density, pore size, differential pressure), ( ii ) electric conductivity, i.e., voltage drop due to electric resistance (electric resistance), ( iii ) shape stability, i.e., preventing the passage narrowing of separator, preventing the crushing of nonwoven fabric with the lapse of time, and preventing the short-circuiting of electrolyte membrane (surface roughness, thickness change due to compression, modulus of elasticity in flexure), and (iv) high processability, i.e., enduring continuous processing, higher processing speed (maximum fracture radius, tensile strength, modulus of elasticity in flexure).

It is preferred that the nonwoven fabric formed of carbon fibers and a water-repellent substance satisfies the following requirements (a-1) through (i-1). (a-1) the weight per square-meter is from 80 to 110 g/m$^2$, (b-1) the thickness is from 0.15 to 0.2 mm, (c-1) the density is from 0.5 to 0.65 g/cm$^3$, (d-1) the surface roughness Ra is 15 $\mu$m or less, (e-1) the maximum fracture radius is 20 mm or less, (f-1) the thickness change due to compression as the difference between the thickness at a planar pressure of 0.15 MPa and the thickness at a planar pressure of 1.0 MPa is 0.05 mm or less, (g-1), the tensile strength is 1.2 kgf/cm or more, (h-1) the modulus of elasticity in flexure is 1.0 GPa or more, and (i-1) the differential pressure occurring when air of 14 m/sec is permeated through the nonwoven fabric in the thickness direction is from 3 to 7 mm Aq.

Being substantially formed of carbon fibers and a water-repellent substance only means that the nonwoven fabric is formed substantially formed of carbon fibers and a water-repellent substance only, and does not substantially contain a resin other than the water-repellent substance used for binding the carbon fibers to each other, or the carbonized resin, etc.

The water-repellent substance is preferably a water-repellent fluoroplastic. Particularly it is preferred that the total weight of the carbon fibers and water-repellent substance contained in the nonwoven fabric is 99 wt% or more based on the weight of the entire nonwoven fabric. More preferred is 99.9 wt% or more, and further more preferred is 99.95 wt% or more.

The water-repellent substance is added to provide a function of preventing water clogging. A resin other than the water-repellent substance does not function in the electrode and increases the electric resistance while shortening the life of the electrode. Furthermore, in the case where the carbonized resin causes the carbon fibers to be bound to each other, flexibility declines, and the maximum fracture radius becomes large, causing the nonwoven fabric to be fractured in additional treatments such as carbon layer coating and bonding to a catalyst layer or an electrolyte membrane.

Similarly it is also preferred that the nonwoven fabric is formed of carbon fibers, fine carbon particles and a water-repellent substance. The fine carbon particles refer to a carbon powder of, for example, carbon black, graphite powder, fullerene, or carbon nanotubes respectively having a particle size of 1 nm to 30 μm, preferably 10 nm to 1 μm. The carbonaceous powder used to bind the carbon fibers to each other is not preferred. The carbonaceous powder is deposited in the nonwoven fabric by means of the water-repellent substance. It is preferred that the total weight of carbon fibers, carbonaceous powder and water-repellent substance in the nonwoven fabric is 95 wt% or more based on the weight of the entire nonwoven fabric. More preferred is 98 wt% or more, and further more preferred is 99 wt% or more.

Next, a nonwoven fabric formed of carbon fibers, fine carbon particles and a water-repellent substance, in which the fine carbon particles exist locally on one side of the nonwoven fabric, is explained.

The fine carbon particles refer to a carbon powder of, for example, carbon black, graphite powder, fullerene or carbon nanotubes consisting of particles of about 1 nm to about 30 μm. Carbon black, fullerene and carbon nanotubes are preferred, since they can smooth the surface of the nonwoven fabric and can enhance the effect of preventing the drying of the electrolyte membrane owing to their small particle size.

The fine carbon particles are deposited in the nonwoven fabric by means of the water-repellent substance or an ion exchange resin. For preventing water clogging, it is preferred that the deposition is achieved by means of the water-repellent substance. As the water-repellent substance, a fluoroplastic, especially PTFE is preferred. The water-repellent substance is used not only for the deposition of fine carbon particles but also to provide an effect of preventing the water clogging of the nonwoven fabric. So, it is preferred that the water-repellent substance exists also in the portion where no fine carbon particles exist.

That the fine carbon particles exist locally on one side of the nonwoven fabric means that the amount of the fine carbon particles on one side of the nonwoven fabric is different from that on the other side. Such a nonwoven fabric can be obtained, for example, by coating the nonwoven fabric on one side only with a fine carbon particle layer or sticking the fine carbon particle layer to one side only. In this case, the fine carbon particle layer partially migrates inside the nonwoven fabric, and it is preferred that the migration depth is less than 100% of the thickness of the nonwoven fabric. More preferred is 70% or less, and further more preferred is 40% or less.

In the case where a nonwoven fabric is used as an electrode diffusion layer, if many fine carbon particles exist near the surface of the nonwoven fabric on the side facing the separator, the diffusibility of the nonwoven fabric on the side facing the separator declines, and water clogging and the decline of cell characteristics occur. It is preferred that the weight per square-meter of the fine carbon particle layer provided on one side of the nonwoven fabric is from 3 to 25 g/m². A more preferred range is from 5 to 20 g/m². If the weight per square-meter of the fine carbon particle layer is too small, the effect of smoothing the surface and the effect of preventing the drying of the electrolyte membrane cannot be sufficiently obtained. If the weight per square-meter of the fine carbon particle layer is too large, the electric resistance becomes high, and water clogging is likely to occur. The weight per square-meter referred to here is the total weight per square-meter of the fine carbon particles and the water-repellent substance or ion exchange resin used for bonding the fine carbon particles.

The weight per square-meter of the nonwoven fabric formed of carbon fibers, fine carbon particles and a water-repellent substance in which the fine carbon particles exist locally on one side of the nonwoven fabric is from 70 to 200 g/m². A preferred range is from 80 to 140 g/m². If the weight per square-meter is too high, the thickness of the nonwoven fabric becomes large, and if the nonwoven fabric is used as an electrode diffusion layer of a fuel cell, there arise such problems that the electric resistance is high and that the cell size becomes large. If the weight per square-meter is too low, there arise such problems that the tensile strength of the carbon fiber nonwoven fabric declines, and that if the nonwoven fabric is used as an electrode diffusion layer of a fuel cell, the diffusion of the fluid in the in-plane direction of the nonwoven fabric becomes insufficient.

The thickness of the nonwoven fabric formed of carbon fibers, fine carbon particles and a water-repellent substance in which the fine carbon particles exist locally on one side of the nonwoven fabric is from 0.12 to 0.27 mm. A preferred range is from 0.15 to 0.23 mm. If the thickness is too large in the case where the nonwoven fabric is used as an electrode diffusion layer of a fuel cell, there arise such problems that the electric resistance is high and that the cell size becomes large. If the thickness is too small, there arise such problems that the strength of the carbon fiber nonwoven fabric declines, and that if the nonwoven fabric is used as an electrode diffusion layer of a fuel cell, the diffusion of the fluid in the in-plane direction of the nonwoven fabric becomes insufficient since the fabric is too thin.

The thickness of the nonwoven fabric formed of carbon fibers, fine carbon particles and a water-repellent substance is measured by the same method as used for measuring the thickness of the above-mentioned nonwoven fabric. However, in this measurement, the side small in the amount of the fine carbon particles is turned to face the indenter of the micrometer when the sample is placed on the table.

The surface roughness Ra of the nonwoven fabric formed of carbon fibers, fine carbon particles and a water-repellent substance in which the fine carbon particles exist locally on one side of the nonwoven fabric is 15 μm or less. Preferred is 10 μm or less. It is preferred that the surface roughness Ra is 2 μm or more. If the surface roughness is too large, there arises such a problem that the electrolyte membrane is likely to be short-circuited in the fuel cell. In the fuel cell, the nonwoven fabric is used in such a manner that the side having the fine carbon particles locally existing is turned to face the catalyst layer or electrolyte membrane.

The surface roughness Ra of the nonwoven fabric formed of carbon fibers, fine carbon particles and a water-repellent substance is measured by the same method as used for measuring the surface roughness Ra of the above-mentioned nonwoven fabric. However, in this measurement, the surface roughness Ra of the surface on the side having many fine carbon particles existing is measured.

The thickness change due to compression as the difference between the thickness at a planar pressure of 0.15 MPa and the thickness at a planar pressure of 1.0 MPa of the nonwoven fabric formed of carbon fibers, fine carbon particles and a water-repellent substance in which the fine carbon particles locally exist on one side of the nonwoven fabric is 0.15 mm or less. Preferred is 0.1 mm or less, and more preferred is 0.05 mm or less. Moreover, it is preferred that the thickness change is 0 mm. If the thickness change due to compression is too large in the case where the nonwoven fabric is used as an electrode diffusion layer of a fuel cell, there arise such problems that the gas passage of the separator is clogged, that the thickness of the fuel cell is unlikely to be constant, and that the fuel cell clamping pressure declines with the lapse of time.

The tensile strength of the nonwoven fabric formed of carbon fibers, fine carbon particles and a water-repellent substance in which the fine carbon particles exist locally on one side of the nonwoven fabric is 0.7 kgf/cm or more. Preferred is 1 kgf/cm or more, and more preferred is 1.2 kgf/cm or more. Moreover, for producing a nonwoven fabric with a tensile strength of more than 10 kgf/cm, any special step such as letting the nonwoven fabric contain a large amount of a water-repellent resin is necessary. Therefore, it is preferred that the tensile strength of the nonwoven fabric is 10 kgf/cm or less.

It is only required that the tensile strength satisfies the aforesaid value at least in one direction of the nonwoven fabric. In the case of a continuous and long nonwoven fabric, it is only required that the tensile strength in the longitudinal direction satisfies the aforesaid value. If the tensile strength is too low, the tension acting in an additional treatment such as catalyst layer coating or bonding to the electrolyte membrane causes the nonwoven fabric to be fractured. Water-repellent treatment and carbon layer coating increase the weight per square-meter, and a catalyst layer coating device applies a force. So, the nonwoven fabric formed of carbon fibers and a water-repellent substance is required to have a tensile strength higher than that of the nonwoven fabric formed of carbon fibers only.

It is preferred that the maximum fracture radius of the nonwoven fabric formed of carbon fibers, fine carbon particles and a water-repellent layer in which the fine carbon particles exist locally on one side of the nonwoven fabric is 20 mm or less. Moreover, it is preferred that the maximum fracture radius is 0 mm or more. If the maximum fracture radius is too large, the bending acting when the carbon fiber nonwoven fabric is additionally treated is likely to cause the nonwoven fabric to be fractured. Even in the case where the nonwoven fabric is not actually wound at such a small radius, if the maximum fracture radius is small, no tension acts on the nonwoven fabric while it undergoes an additional treatment such as water repellence treatment or carbon layer coating or while it is processed in an additional treatment device, and even if the nonwoven fabric is locally loosened at a large curvature, it is unlikely to be fractured.

It is preferred that the modulus of elasticity in flexure of the nonwoven fabric formed of carbon fibers, fine carbon particles and a water-repellent substance in which the fine carbon particles exist locally on one side of the nonwoven fabric is 0.5 GPa or more. More preferred is 1 GPa or more, and further more preferred is 1.5 GPa or more. Moreover, it is preferred that the modulus of elasticity in flexure is 25 GPa or less. More preferred is 15 GPa or less, and further more preferred is 10 GPa or less. As for the reason, if the modulus of elasticity in flexure is too high, it is difficult to wind the nonwoven fabric, and when the nonwoven fabric is bent, it is likely to be fractured.

The modulus of elasticity in flexure can be enhanced by letting the nonwoven fabric contain a water-repellent substance, using a fluoroplastic as the water-repellent substance, and by carrying out the heating and pressurization.

If the modulus of elasticity in flexure is too low, the electrode diffusion layer is likely to protrude into the gas passage of the separator, to narrow the passage. So, the nonwoven fabric formed of carbon fibers and a water-repellent substance is required to have a modulus of elasticity in flexure higher than that of the nonwoven fabric substantially formed of carbon fibers only. Also in an additional treatment such as carbon layer coating, a higher modulus of elasticity in flexure allows easier processing.

Depending on the gas passage pattern, it is preferred that the modulus of elasticity in flexure satisfies the aforesaid value at least in one direction. In the case of a long and continuous substrate, it is preferred that the modulus of elasticity in flexure in the longitudinal direction satisfies the aforesaid value. It is more preferred that the values of modulus of elasticity in flexure in both the longitudinal and transverse directions satisfy the aforesaid value. In the case where the modulus of elasticity in flexure in one direction only is high, the nonwoven fabric has high processability, and furthermore if the gas passage of the separator is arranged to be perpendicular to the direction in which the modulus of elasticity in flexure is high, the effect of improving passage narrowing can be further enhanced. In the case where the values of modulus of elasticity in flexure in two directions are high, the nonwoven fabric of course has high processability, and the passage narrowing can be improved irrespectively of the gas passage pattern of the separator.

The modulus of elasticity in flexure of the nonwoven fabric formed of carbon fibers, fine carbon particles and a water-repellent substance can be measured by the same method as used for measuring the modulus of elasticity in flexure of the above-mentioned nonwoven fabric. However, in this measurement, the side containing many fine carbon particles is turned to face the supporting points. If the carbon fibers are oriented also in the thickness direction of the nonwoven fabric, the entanglement between fibers increases and the tensile strength of the nonwoven fabric can be enhanced. As the method for orienting the carbon fibers also in the thickness direction, preferred is a method in which an oxidized acrylic fiber nonwoven fabric having oxidized acrylic fibers oriented also in the thickness direction is carbonized.

The carbon fiber nonwoven fabric of the invention has excellent properties in ( i ) mass transfer, i.e., gas supply and water discharge (weight per square-meter, thickness, density, pore size, differential pressure), ( ii ) electric conductivity, i.e., voltage drop due to electric resistance (electric resistance), ( iii ) shape stability, i.e., preventing the passage narrowing of separator, preventing the crushing of nonwoven fabric with the lapse of time, and preventing the short-circuiting of electrolyte membrane (surface roughness, thickness change due to compression, modulus of elasticity in flexure), and (iv) high processability, i.e., enduring continuous processing, higher processing speed (maximum fracture radius, tensile strength, modulus of elasticity in flexure). Therefore, the carbon fiber nonwoven fabric of the invention can be preferably used in an electrode-forming material such as a gas diffusion electrode.

The carbon fiber nonwoven fabric of the invention can be preferably used as an electrically conductive sheet of a fuel cell, especially as an electrode diffusion layer of a solid polymer type fuel cell, especially preferably used as an electrode diffusion layer of a fuel cell having a grooved separator.

In the case where a grooved separator is used as a passage for feeding oxygen or fuel to a fuel cell electrode, an electrode diffusion layer made of a material likely to be crushed by compression or having a low modulus of elasticity in flexure protrudes into the groove formed as a gas passage in the separator adjacent to the electrode diffusion layer, to narrow the gas passage, thus increasing the pressure loss of gas flow, causing water clogging in the passage, and causing shortage of gas feed to the electrode.

The thin carbon fiber nonwoven fabric likely to be slightly crushed by compression and having a high modulus of elasticity in flexure of the invention can effectively prevent such interferences with the passage function. As a result, the groove depth of the grooved separator of the fuel cell can be reduced, and the fuel cell as a whole can be provided as a compact device.

The carbon fiber nonwoven fabric of the invention can be preferably used as a material forming an electrode diffusion layer in a unit having an electrode diffusion layer and a catalyst layer disposed in layers or in a unit having an electrode diffusion layer, a catalyst layer and a polymeric electrolyte membrane disposed in layers. One unit as described above or two units, each as described above, form a fuel cell.

The fuel cell formed by using the soft carbon fiber nonwoven fabric likely to be slightly crushed by compression of the invention is strong against vibration and impact and compact, and is suitable as a fuel cell for a moving body. It is especially suitable for a moving body required to be compact, particularly for a motor vehicle or two-wheeled car.

In the process for producing an oxidized acrylic fiber nonwoven fabric or carbon fiber nonwoven fabric, it is preferred to include a step of pressurizing a nonwoven fabric obtained by using oxidized acrylic fibers, in the thickness direction using a continuous press at a temperature of 140°C or higher and at a linear pressure of 5 to 200 kgf/cm, since the oxidized acrylic fiber nonwoven fabric or carbon fiber nonwoven fabric can be made thin in thickness, high in density, small in the thickness change due to compression and smooth on the surface.

A more preferred temperature range is from 160 to 300°C, and a further more preferred range is from 170 to 230°C. If the temperature is too low, the effect of compressing the nonwoven fabric by the pressurization is insufficient, and especially if the temperature is lower than 140°C, the effect is small. If the temperature is too high, the oxidized acrylic fiber nonwoven fabric is oxidized in air, and such a problem as strength drop occurs. Furthermore, because of high temperature, equipment maintenance and process control become difficult.

A continuous press refers to a method of pressurizing the nonwoven fabric while continuously feeding it, and in this method, a roll press, belt press or the like can be used. In the case where the oxidized acrylic fiber nonwoven fabric is pressurized in the thickness direction at a temperature of 140°C or higher, it is preferred that the pressurization is performed using a linear pressure as applied by a roll press. The reason is that the time taken for the pressurization step can be short. It is preferred that the pressure in this case is from 5 to 200 kgf/cm. A more preferred range is from 10 to 100 kgf/cm, and a further more preferred range is from 20 to 70 kgf/cm. If the pressure is too low, the effect of compressing the nonwoven fabric by pressurization is insufficient, and if the pressure is too high, the strength drop of the nonwoven fabric and wrinkling during carbonization occur.

A continuous press used for the pressurization by a linear pressure allows a very high pressure to be applied to the nonwoven fabric in a short time. It is preferred that the processing speed, i.e., the traveling speed of the nonwoven fabric is from 0.2 to 30 m/min. If the speed is less than 0.2 m/min, the efficiency of the pressurization step is too low. If it is higher than 30 m/min, it is difficult to keep the tension acting on the nonwoven fabric constant, and it becomes difficult to stabilize the physical properties. For increasing the pressurization time, it is also preferred that an elastic roll such as a rubber roll is used at least as one of the rolls of a roll press.

In the process for producing an oxidized acrylic fiber nonwoven fabric or carbon fiber nonwoven fabric of the invention, it is preferred to contain a step of pressurizing the nonwoven fabric obtained by using the oxidized acrylic fibers, by a continuous method at a temperature of 140 to 300°C and at a pressure of 0.5 to 40 MPa for a pressurization time of 30 seconds or more, since the oxidized acrylic fiber nonwoven fabric or carbon fiber nonwoven fabric can be made thin in thickness, high in density, small in the thickness change due to compression and smooth on the surface.

Methods available for pressurizing an oxidized fiber nonwoven fabric continuously by a planar pressure (continuous press), the following methods include the following. In one method, while a flat plate press and an intermittent nonwoven fabric carrying device are arranged for use, a step in which the press is used for pressurizing a nonwoven fabric section carried into the press by a certain length and stopped, and another step in which, after completion of pressurization, the press is opened to carry out the pressed nonwoven fabric section out of the press while the nonwoven fabric section to be pressed next is simultaneously carried into the press, are repeated alternately. In another method, a belt press is used in such a manner that a traveling belt is used for pressing the nonwoven fabric.

According to the method using a flat plate press, since uniform pressurization over the entire pressing surface can be made, the pressurized nonwoven fabric can have a highly accurate thickness, and the strength drop of the nonwoven fabric is unlikely to occur. If the carrying length per time is kept shorter than the length of the flat plate press, the time during which pressurization is not made can be kept short. In the method using a belt press, it is difficult to apply a constant planar pressure in the traveling direction of the nonwoven fabric, and substantially a linear pressure is used for the pressurization.

In the method in which a planar pressure is used for the pressurization of the oxidized acrylic fiber nonwoven fabric in the thickness direction, since the pressurization is made for a relatively long time at a relatively low pressure compared with the pressurization using a linear pressure, the effect of densifying the nonwoven fabric by heat-setting after pressurization is large, and the strength drop of the nonwoven fabric caused due to a local high pressure after pressurization is unlikely to occur.

The temperature at the time of pressurization is from 140 to 300°C. A preferred range is from 160 to 250°C, and a more preferred range is from 170 to 230°C. If the temperature is too low, the effect of compressing the nonwoven fabric by pressurization is insufficient, and especially at lower than 140°C, the effect is small. If the temperature is too high, the oxidized acrylic fiber nonwoven fabric is oxidized in air, and there arises such a problem as strength drop. Furthermore, because of high temperature, equipment maintenance and process control are difficult.

It is preferred that the pressure is from 1 to 25 MPa. A more preferred range is from 1.5 to 8 MPa, and a further more preferred range is from 2 to 4 MPa. If the pressure is too low, the effect of compressing the nonwoven fabric is insufficient. If the pressure is too high, the gas permeability of the carbon fiber nonwoven fabric declines, and the nonwoven fabric cannot exhibit good properties as a gas diffusion layer of a fuel cell. Furthermore, there arises a problem that the nonwoven fabric partially adheres to the press plate surface of the press and the releasing paper used as required, and the fibers forming the nonwoven fabric are strongly bound to each other. As a result, in the step of treatment for carbonizing the pressurized nonwoven fabric, the nonwoven fabric is likely to be wrinkled. Furthermore, since an area of 1 m$^2$ is pressurized at a pressure of 25 MPa, a press with a very high capacity of 2,550 tons is necessary.

It is preferred that the pressurization time is from 1.5 to 10 minutes. A more preferred range is from 3.5 to 6 minutes. In the pressurization by a planar pressure, since the nonwoven fabric is pressurized for a long time compared with the pressurization by a linear pressure, the fibers are thermally set. Compared with the pressurization by a linear pressure, the heat-setting gives an effect of greatly improving the thickness change due to compression, surface roughness, tensile strength and modulus of elasticity in flexure. If the pressurization time is less than 30 seconds, the heat-setting effect cannot be sufficiently obtained. Even if the pressurization is performed for more than 6 minutes, the improving effect by heat-setting cannot be further enhanced so much. In the case where pressurization is performed divisionally several times, for example, by a method consisting of a flat plate press and intermittent material carrying in combination, it is only required that the cumulative pressurization time conforms to the aforesaid range.

In the process for producing an oxidized acrylic fiber nonwoven fabric or carbon fiber nonwoven fabric of the invention, it is preferred to include a step of continuously pressurizing the nonwoven fabric obtained by using oxidized acrylic fibers, in the thickness direction at a temperature of 140°C or higher and at a linear pressure of 5 to 200 kgf/cm, and a step of continuously pressurizing at a temperature of 140 to 300°C and at a planar pressure of 0.05 to 40 MPa for a pressurization time of 10 seconds or more, since the obtained oxidized acrylic fiber nonwoven fabric or obtained carbon fiber nonwoven fabric becomes thin in thickness, high in density, small in the thickness change due to compression, and smooth on the surface.

If the pressurization by a linear pressure and the pressurization by a planar pressure are used together, a high compression effect can be obtained compared with the pressurization by a linear pressure only. Moreover, compared with the pressurization by a planar pressure only, the pressurization by a planar pressure can be shortened in time and lowered in pressure.

It is preferred that the temperature at the time of pressurization is from 160 to 300°C irrespectively of the pressurization by a linear pressure or a planar pressure. A more preferred range is from 170 to 230°C. If the temperature is too low, the effect of compressing the nonwoven fabric by pressurization is insufficient, and especially at lower than 140°C, the effect is small. If the temperature is too high, the oxidized acrylic fiber nonwoven fabric is oxidized in air, and such a problem as strength drop occurs. Furthermore, because of high temperature, equipment maintenance and process control become difficult.

It is preferred that the pressure in the pressurization by a linear pressure is from 5 to 200 kgf/cm. A more preferred range is from 10 to 100 kgf/cm, and a further more preferred range is from 20 to 70 kgf/cm. If the pressure is too low, the effect of compressing the nonwoven fabric by pressurization is insufficient, and if the pressure is too high, the strength drop of the nonwoven fabric occurs.

It is preferred that the pressure in the pressurization by a planar pressure is from 0.1 to 8 MPa. A more preferred range is from 0.2 to 2 MPa. If the pressure is too low, the effect of compressing the nonwoven fabric is insufficient. If the pressure is too high, the gas permeability of the carbon fiber nonwoven fabric declines, and the nonwoven fabric cannot exhibit sufficient properties as a gas diffusion layer of a fuel cell. Furthermore, in the case where the nonwoven fabric is pressurized at a pressure of 8 MPa per area of 1 $m^2$, the press used is required to have a high capacity of 820 tons.

It is preferred that the pressurization time by a planar pressure is from 20 seconds to 6 minutes. A more preferred range is from 30 seconds to 4 minutes, and a further more preferred range is from 1 to 3 minutes. In the pressurization by a linear pressure, since the nonwoven fabric is crushed especially at thick portions, the nonwoven fabric can be densified by heat-setting and the effect of improving physical properties can be obtained, respectively in a period of time shorter than that in the pressurization by a planar pressure.

To enhance the effect of densifying the oxidized acrylic fiber nonwoven fabric by pressurization, it is preferred that the density of the oxidized acrylic fibers is 1.45 or less. More preferred is 1.43 or less. If flame retardation progresses so much as to enhance the density, the fiber deformation by pressurization is unlikely to occur, and the effect of pressurization is unlikely to be obtained. Furthermore, at the time of pressurization, fiber breaking is likely to occur.

If the oxidized acrylic fiber nonwoven fabric obtained like this is carbonized, a carbon fiber nonwoven fabric thin in thickness, dense, high in modulus of elasticity in flexure, small in the deformation due to compression, small in surface roughness, large in flexibility and suitable for a gas diffusion layer of a fuel cell can be obtained.

Examples

The voltage of a fuel cell in the following examples was measured according to the following method.

Measurement of the voltage of a fuel cell:

A carbon fiber nonwoven fabric was immersed in an aqueous PTFE dispersion and pulled up and dried to have 20 wt% of PTFE deposited in the nonwoven fabric. The obtained nonwoven fabric was coated with a mixture consisting of carbon black and PTFE, and it was heat-treated at 380°C to produce a nonwoven fabric having a carbon layer.

The ratio of carbon black to PTFE in the mixture was 8:2, and the amount of the mixture applied to the nonwoven fabric was about 2 mg/$cm^2$.

On the other hand, a membrane-catalyst sheet was prepared by depositing a mixture consisting of platinum-loaded carbon black as a catalyst on both the surfaces of a Nafion 112 membrane (produced by E.I. du Pont de Nemours and Company).

The loaded amount of platinum as a catalyst was about 0.5 mg/$cm^2$. The membrane-catalyst sheet was held between two nonwoven fabrics respectively having a carbon layer, with the carbon layers turned inside, and the assembly was heated and pressurized at a temperature of 130°C and at a pressure of 3 MPa, for integration, to obtain a membrane-electrode assembly (MEA).

The MEA was held between grooved separators, and the voltage at a current density of 1A/$cm^2$ was measured according to a conventional method. The cell temperature was 70°C; hydrogen gas humidifying temperature, 80°C; air gas humidifying temperature, 60°C; and gas pressure, atmospheric pressure. The hydrogen utilization at 1 A/$cm^2$ was 70%, and the air utilization was 40%. When the measured voltage was higher, the product was judged to be more excellent.

Examples 1 to 3:

Oxidized acrylic fibers having a density of 1.41 g/cm$^3$ was crimped and subsequently cut to a fiber length of 51 mm, to obtain short oxidized acrylic fibers. The obtained short oxidized acrylic fibers were carded, and sheets, each obtained by the carding, were laminated as many as to obtain the weight per square-meter described later. The laminate was treated for water jet entanglement, to obtain an oxidized acrylic fiber nonwoven fabric.

The obtained oxidized acrylic fiber nonwoven fabric was passed through a roll press at a speed of 2 m/min, for being pressurized at a temperature of 200°C and at a linear pressure of 50 kgf/cm in the thickness direction. The weight per square-meter of the pressurized oxidized acrylic fiber nonwoven fabric was 102 g/m$^2$ (Example 1), 127 g/m$^2$ (Example 2), or 170 g/m$^2$ (Example 3). Table 1 shows the pressurization conditions in the production process and the property values (weight per square-meter, thickness, density, thickness change due to compression) of the produced oxidized acrylic fiber nonwoven fabrics.

Comparative Example 1:

An oxidized acrylic fiber nonwoven fabric having a weight per square-meter of 60 g/m$^2$ was obtained as described for Example 1. Table 1 shows the pressurization conditions in the production process and the property values (weight per square-meter, thickness, density, thickness change due to compression) of the produced oxidized acrylic fiber nonwoven fabric.

Comparative examples 2 and 6:

Oxidized acrylic fibers having a density of 1.41 g/cm$^3$ were crimped and subsequently cut to a fiber length of 51 mm, to obtain short oxidized acrylic fibers. The obtained short oxidized acrylic fibers were carded, and subsequently treated for water jet entanglement, to obtain an oxidized acrylic fiber nonwoven fabric. Table 1 shows the pressurization conditions in the production process and the property values (weight per square-meter, thickness, density, thickness change due to compression) of the produced oxidized acrylic fiber nonwoven fabrics.

Comparative Examples 3 to 5:

The oxidized acrylic fiber nonwoven fabric of Comparative Example 2 was passed through a roll pressure at a speed of 2 m/min, for being pressurized at a temperature of 60°C (Comparative Example 3), 100°C (Comparative Example 4), or 125°C (Comparative Example 5) and at a linear pressure of 50 kgf/cm in the thickness direction. Table 1 shows the pressurization conditions in the production process and the property values (weight per square-meter, thickness, density, thickness change due to compression) of the produced oxidized acrylic fiber nonwoven fabrics.

Examples 4 to 7:

The oxidized acrylic fiber nonwoven fabric of Comparative Example 2 was passed through a roll press at a speed of 2 m/min, for being pressurized at the temperature and linear pressure shown in Table 1 in the thickness direction. Table 1 shows the pressurization conditions in the production process and the property values (weight per square-meter, thickness, density, thickness change due to compression) of the produced oxidized acrylic fiber nonwoven fabrics.

Examples 8 and 9:

The oxidized acrylic fiber nonwoven fabric of Comparative Example 6 was pressurized at the temperature and the planar pressure shown in Table 1 in the thickness direction. Table 1 shows the pressurization conditions in the production process and the property values (weight per square-meter, thickness, density, thickness change due to compression) of the produced oxidized acrylic fiber nonwoven fabrics.

Examples 10 to 16:

The oxidized acrylic fiber nonwoven fabrics of Examples 1 to 7 were carbonized in vacuum with the highest temperature kept at 1,950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Comparative Examples 7 to 12:

The oxidized acrylic fiber nonwoven fabrics of Comparative examples 1 to 6 were carbonized in vacuum with the highest temperature kept at 1, 950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Comparative Examples 13 and 14:

The oxidized acrylic fiber nonwoven fabric of Comparative Example 6 was passed through a roll press at a speed of 2 m/min, for being pressurized at a temperature of 200°C and at a linear pressure of 18.5 kgf/cm (Comparative Example 13) or 400 kgf/cm (Comparative Example 14) in the thickness direction. The obtained nonwoven fabrics were carbonized in vacuum with the highest temperature kept at 1,950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Examples 17 to 20:

The oxidized acrylic fiber nonwoven fabric of Comparative Example 6 was passed through a roll press at a speed of 2 m/min, for being pressurized at a temperature of 200°C and at a linear pressure of 38 kgf/cm (Example 17), 50 kgf/cm (Example 18), 100 kgf/cm (Example 19), or 200 kgf/cm (Example 20) in the thickness direction. The obtained nonwoven fabrics were carbonized in vacuum with the highest temperature kept at 1,950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Examples 21 and 22:

Oxidized acrylic fibers having a density of 1.41 g/cm$^3$ were crimped and subsequently cut to a fiber length of 51 mm, to obtain short oxidized acrylic fibers. The obtained short oxidized acrylic fibers were carded, and subsequently treated for water jet entanglement, to obtain an oxidized acrylic fiber nonwoven fabric. The weight per square-meter of the obtained oxidized acrylic fiber nonwoven fabric was 142 g/m$^2$.
The obtained oxidized acrylic fiber nonwoven fabric was pressurized at a temperature of 230°C and at a planar pressure of 1.5 MPa (Example 21) or 2.5 MPa (Example 22) for a pressurization time of 5 minutes in the thickness direction. The obtained nonwoven fabrics were carbonized in vacuum with the highest temperature kept at 1,950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Examples 23 and 24:

The oxidized acrylic fiber nonwoven fabric of Comparative Example 6 was pressurized at a temperature of 230°C and at a planar pressure of 4.9 MPa (Example 23) or 9.8 MPa (Example 24) for a pressurization time of 5 minutes in the thickness direction. The obtained nonwoven fabrics were carbonized in vacuum with the highest temperature kept at 1,950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Comparative Example 15:

The oxidized acrylic fiber nonwoven fabric of Comparative Example 6 was pressurized at a temperature of 230°C and at a planar pressure of 19.6 MPa for a pressurization time of 5 minutes in the thickness direction. The obtained nonwoven fabric was carbonized in vacuum with the highest temperature kept at 1, 950°C, to obtain a carbon fiber nonwoven fabric. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabric.

Examples 25 and 26:

Oxidized acrylic fibers having a density of 1.41 g/cm$^3$ were crimped and subsequently cut to a fiber length of 51 mm, to obtain short oxidized acrylic fibers. The obtained short oxidized acrylic fibers were carded and subsequently treated for water jet entanglement, to obtain an oxidized acrylic fiber nonwoven fabric. The weight per square-meter of the obtained oxidized acrylic fiber nonwoven fabric was 130 g/m$^2$.

The obtained oxidized acrylic fiber nonwoven fabric was passed through a roll press at a speed of 2 m/min, for being pressurized at a temperature of 200°C and at a linear pressure of 50 kgf/cm in the thickness direction. The roll-pressed nonwoven fabric was further pressurized at a temperature of 230°C and at a planar pressure of 0.39 MPa (Example 25) or 4.9 MPa (Example 26) for a pressurization time of 5 minutes in the thickness direction.

The obtained pressurized oxidized acrylic fiber nonwoven fabrics were carbonized in vacuum with the highest temperature kept at 1,950°C, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Examples 27 to 30:

The carbon fiber nonwoven fabrics of Examples 18, 23, 24 and 25 were respectively immersed in a PTFE dispersion and pulled up and dried to obtain carbon fiber nonwoven fabrics respectively with 20 wt% of PTFE deposited. The obtained carbon fiber nonwoven fabrics were respectively heat-treated at a temperature of 380°C. The heat-treated nonwoven fabrics were respectively heated and pressurized at a temperature of 200°C and at a planar pressure of 3 MPa, and cooled to room temperature while being pressurized, then being taken out of the press, to obtain carbon fiber nonwoven fabrics. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabrics.

Example 31

The carbon fiber nonwoven fabric of Example 25 was immersed in a PTFE dispersion and pulled up and dried to obtain a carbon fiber nonwoven fabric with 20 wt% of PTFE deposited. The obtained nonwoven fabric was coated with a mixture consisting of carbon black and PTFE, and the coated nonwoven fabric was heat-treated at a temperature of 380°C, to produce a nonwoven fabric having a carbon layer. The deposited amount of the carbon black/PTFE mixture was about 2 mg/cm$^2$, and the ratio by weight of carbon black to PTFE in the deposited mixture was 8:2.

The carbon fiber nonwoven fabric was heated and pressurized at a temperature of 200°C and at a planar pressure of 3 MPa, and cooled to room temperature while being pressurized, then being taken out of the press, to obtain a carbon fiber nonwoven fabric formed of carbon fibers, a water-repellent substance and fine carbon particles. Table 2 shows the property values (weight per square-meter, thickness, density, maximum fracture radius, surface roughness Ra, thickness change due to compression, tensile strength, differential pressure occurring at the time of air permeation, electric resistance, fuel cell voltage) of the produced carbon fiber nonwoven fabric.

Table 3 shows the physical properties relating to the supply of reaction gas to the electrode and relating to the drying of the electrolyte membrane (weight per square-meter, thickness, density, peak size in pore size distribution, differential pressure occurring at the time of air permeation, and fuel cell voltage) of Examples 10 to 12, 14, 18 and 21 to 25 and Comparative Examples 7, 8 and 15, the fuel cell voltage values of which are shown in Table 2. Furthermore, Table 4 shows values of modulus of elasticity in flexure in the length direction (longitudinal direction) and in the width direction (transverse direction) of the respective carbon fiber nonwoven fabrics obtained in Examples 23, 24, 28 and 29 and Comparative Example 12.

From Table 1, it can be seen that the oxidized acrylic fiber nonwoven fabrics of the invention are thin in thickness, high in density and small in the thickness change due to compression. Moreover, it can be seen that if oxidized acrylic fiber nonwoven fabrics are pressurized at a temperature of 150°C or higher, they can be highly densified.

From Table 2, it can be seen that the carbon fiber nonwoven fabrics of the invention are thin in thickness, high in density and suitable for application as electrode diffusion layers. One reason why they are suitable is that since they are small in maximum fracture radius and high in tensile strength, they can endure an additional treatment such as water repellence treatment. Another reason is that since they are small in surface roughness, they can be uniformly coated with a catalyst, and the short-circuiting through the electrolyte membrane is unlikely to occur. A further other reason is that since they are small in the thickness change due to compression, they are unlikely to cause fluctuation or change in cell size and also unlikely to cause gas passage closure. A still further other reason is that since the differential pressure occurring at the time of air permeation is in a good range, high fuel cell voltages can be obtained as a result.

From Table 3, the following can be seen about the relation between the physical properties of carbon fiber nonwoven fabrics of the invention and fuel cell voltages. In the case where the density is too low or too high, the fuel cell voltage declines. Also in the case where the thickness is too small or too large, the fuel cell voltage declines. As in Comparative Example 7, even in the case where the density is good, since the weight per square-meter, thickness and differential pressure are too small, the fuel cell voltage declines. Also in the case where the differential pressure is too low or too high, the fuel cell voltage declines greatly. Even in the case where there is no differential pressure, the fuel cell voltage depends on the weight per square-meter, thickness and density.

The voltage drop because of low weight per square-meter, low density, small thickness and small differential pressure causes the electrolyte membrane to be dried. It is considered that the voltage drop because of high density and large differential pressure is caused since the supply of hydrogen and oxygen to the electrode catalyst layers is insufficient and since water clogging occurs in the electrode diffusion layers. The peak size in the pore size distribution is small when the carbon fiber nonwoven fabric is thin and dense, and if the peak size in the pore size distribution is small, the effect of preventing the drying of the electrolyte membrane can be obtained.

From Table 4, it can be seen that since the carbon fiber nonwoven fabrics of the invention are dense, the values of modulus of elasticity in flexure are large. Especially carbon fiber nonwoven fabrics having PTFE deposited as a water-repellent substance are remarkable in the effect. If such a carbon fiber nonwoven fabric of the invention is used to form an electrode diffusion layer, a high effect can be obtained in preventing the gas passage narrowing of the separator.

Table 1

| | Pressurization conditions | | | Weight per square-meter (g/m$^2$) | Thickness (mm) | Density (g/cm$^3$) | Thickness change due to compression (mm) |
|---|---|---|---|---|---|---|---|
| | Temperature (°C) | Linear pressure (kgf/cm) | Planar pressure (MPa) | | | | |
| Example 1 | 200 | 50 | | 102 | 0.18 | 0.57 | 0.04 |
| Example 2 | 200 | 50 | | 127 | 0.23 | 0.55 | 0.05 |
| Example 3 | 200 | 50 | | 170 | 0.30 | 0.57 | 0.07 |
| Example 4 | 150 | 50 | | 138 | 0.29 | 0.48 | 0.08 |
| Example 5 | 200 | 50 | | 139 | 0.25 | 0.56 | 0.06 |
| Example 6 | 200 | 100 | | 137 | 0.23 | 0.60 | 0.06 |
| Example 7 | 200 | 150 | | 137 | 0.18 | 0.76 | 0.04 |
| Example 8 | 230 | | 4.9 | 120 | 0.23 | 0.52 | 0.03 |
| Example 9 | 230 | | 9.8 | 119 | 0.19 | 0.63 | 0.02 |
| Comparative example 1 | 200 | 50 | | 60 | 0.11 | 0.54 | 0.03 |
| Comparative example 2 | No pressurization | | | 139 | 0.55 | 0.25 | 0.25 |
| Comparative example 3 | 60 | 50 | | 140 | 0.45 | 0.31 | 0.16 |

Table 1 (continued)

| | Pressurization conditions | | | Weight per square-meter (g/m$^2$) | Thickness (mm) | Density (g/cm$^3$) | Thickness change due to compression (mm) |
|---|---|---|---|---|---|---|---|
| | Temperature (°C) | Linear pressure (kgf/cm) | Planar pressure (MPa) | | | | |
| Comparative example 4 | 100 | 50 | | 138 | 0.35 | 0.39 | 0.11 |
| Comparative example 5 | 125 | 50 | | 139 | 0.33 | 0.42 | 0.10 |
| Comparative example 6 | No pressurization | | | 121 | 0.48 | 0.25 | 0.22 |

Table 2

| | Weight per square-meter (g/m²) | Thickness (mm) | Density (g/cm³) | Maximum fracture radius (mm) | Surface roughness Ra (μm) |
|---|---|---|---|---|---|
| Example 10 | 60 | 0.13 | 0.48 | <10 | 20 |
| Example 11 | 73 | 0.16 | 0.46 | <10 | 24 |
| Example 12 | 101 | 0.21 | 0.47 | <10 | 27 |
| Example 13 | 80 | 0.23 | 0.35 | <10 | 24 |
| Example 14 | 78 | 0.17 | 0.51 | <10 | 20 |
| Example 15 | 78 | 0.16 | 0.49 | <10 | 17 |
| Example 16 | 76 | 0.13 | 0.58 | <10 | 14 |
| Example 17 | 77 | 0.22 | 0.34 | <10 | 23 |
| Example 18 | 73 | 0.21 | 0.35 | <10 | 23 |
| Example 19 | 77 | 0.17 | 0.46 | <10 | 21 |
| Example 20 | 76 | 0.13 | 0.61 | <10 | 15 |
| Example 21 | 90 | 0.20 | 0.45 | <10 | 12 |
| Example 22 | 90 | 0.18 | 0.50 | <10 | 10 |
| Example 23 | 80 | 0.16 | 0.50 | <10 | 11 |
| Example 24 | 78 | 0.13 | 0.60 | <10 | 8 |
| Example 25 | 78 | 0.16 | 0.49 | <10 | 11 |
| Example 26 | 77 | 0.13 | 0.59 | <10 | 8 |
| Example 27 | 91 | 0.19 | 0.48 | <10 | 12 |
| Example 28 | 96 | 0.17 | 0.56 | <10 | -- |
| Example 29 | 98 | 0.12 | 0.82 | <10 | -- |
| Example 30 | 98 | 0.17 | 0.58 | <10 | 8 |
| Example 31 | 118 | 0.21 | -- | <10 | -- |

Table 2(Continued)

|  | Thickness change due to compression (mm) | Tensile strength (kgf/cm) | Differential pressure at time of air permeation (mmAq) | Electric resistance (mΩcm²) | Fuel cell voltage (V) |
|---|---|---|---|---|---|
| Example 10 | 0.06 | 0.26 | 1.8 | 8 | 0.39 |
| Example 11 | 0.08 | 0.33 | 2.2 | 9 | 0.43 |
| Example 12 | 0.09 | 0.37 | 3.3 | 12 | 0.41 |
| Example 13 | 0.10 | 0.52 | -- | -- | -- |
| Example 14 | 0.06 | 0.60 | 2.3 | -- | 0.44 |
| Example 15 | 0.06 | 0.35 | -- | -- | -- |
| Example 16 | 0.05 | 0.20 | -- | -- | -- |
| Example 17 | 0.08 | 0.43 | 1.9 | 10 | -- |
| Example 18 | 0.08 | 0.43 | 1.8 | 9 | 0.44 |
| Example 19 | 0.06 | 0.35 | 2.7 | 7 | -- |
| Example 20 | 0.04 | 0.62 | 6.6 | 6 | -- |
| Example 21 | 0.04 | -- | 3.9 | 6 | 0.47 |
| Example 22 | 0.02 | -- | 4.5 | 5 | 0.49 |
| Example 23 | 0.03 | 0.77 | 3.6 | 6 | 0.47 |
| Example 24 | 0.02 | 1.01 | 6.1 | 5 | 0.47 |
| Example 25 | 0.03 | 0.77 | 4.5 | 7 | 0.47 |
| Example 26 | 0.02 | 0.80 | 5.2 | 5 | -- |
| Example 27 | 0.07 | 0.88 | -- | 15 | 0.44 |
| Example 28 | 0.03 | -- | -- | -- | 0.47 |
| Example 29 | 0.01 | -- | -- | -- | 0.47 |
| Example 30 | 0.03 | 3.00 | -- | -- | 0.47 |
| Example 31 | 0.03 | -- | -- | -- | 0.47 |

Table 2(Continued)

| | Weight per square-meter (g/m$^2$) | Thickness (mm) | Density (g/cm$^3$) | Maximum fracture radius (mm) | Surface roughness Ra (μm) |
|---|---|---|---|---|---|
| Comparative example 7 | 38 | 0.09 | 0.41 | <10 | 20 |
| Comparative example 8 | 81 | 0.50 | 0.16 | <10 | 42 |
| Comparative example 9 | 81 | 0.41 | 0.20 | <10 | 35 |
| Comparative example 10 | 80 | 0.32 | 0.25 | <10 | 30 |
| Comparative example 11 | 79 | 0.29 | 0.27 | <10 | 28 |
| Comparative example 12 | 74 | 0.42 | 0.18 | <10 | 35 |
| Comparative example 13 | 73 | 0.27 | 0.27 | <10 | 28 |
| Comparative example 14 | 82 | 0.11 | 0.75 | <10 | 14 |
| Comparative example 15 | 74 | 0.10 | 0.72 | <10 | 8 |

Table 2(Continued)

| | Thickness change due to compression (mm) | Tensile strength (kgf/cm) | Differential pressure at time of air permeation (mmAq) | Electric resistance (mΩcm$^2$) | Fuel cell voltage (V) |
|---|---|---|---|---|---|
| Comparative example 7 | 0.04 | 0.10 | 0.8 | 8 | 0.31 |
| Comparative example 8 | 0.29 | 0.63 | 1.5 | -- | 0.22 |
| Comparative example 9 | 0.19 | 0.50 | -- | -- | -- |
| Comparative example 10 | 0.13 | -- | -- | -- | -- |
| Comparative example 11 | 0.12 | -- | -- | -- | -- |
| Comparative example 12 | 0.19 | 0.50 | 1.2 | 12 | -- |
| Comparative example 13 | 0.10 | 0.53 | 1.6 | 11 | - |
| Comparative example 14 | 0.04 | 0.59 | 12.0 | 6 | -- |
| Comparative example 15 | 0.01 | 1.23 | 10.3 | 5 | 0.24 |

Table 3

| | Weight per square-meter (g/m$^2$) | Thickness (mm) | Density (g/cm$^3$) | Peak size in pore size distribution (μm) | Differential pressure at time of air permeation (mmAq) | Fuel cell voltage (V) |
|---|---|---|---|---|---|---|
| Example 10 | 60 | 0.13 | 0.48 | -- | 1.8 | 0.39 |
| Example 11 | 73 | 0.16 | 0.46 | -- | 2.2 | 0.43 |
| Example 12 | 101 | 0.21 | 0.47 | -- | 3.3 | 0.41 |
| Example 14 | 7 8 | 0.17 | 0.51 | -- | 2 . 3 | 0.44 |
| Example 18 | 73 | 0.21 | 0.35 | 36 | 1.8 | 0.44 |
| Example 21 | 90 | 0.20 | 0.45 | -- | 3.9 | 0.47 |
| Example 22 | 90 | 0.18 | 0.50 | -- | 4.5 | 0.49 |
| Example 23 | 80 | 0.16 | 0.50 | 29 | 3.6 | 0.47 |
| Example 24 | 78 | 0.13 | 0.60 | -- | 6.1 | 0.47 |
| Example 25 | 78 | 0.16 | 0.49 | -- | 4.5 | 0.47 |
| Comparative example 7 | 38 | 0.09 | 0.41 | -- | 0.8 | 0.31 |
| Comparative example 8 | 81 | 0.50 | 0.16 | 100 | 1.5 | 0.22 |
| Comparative example 15 | 74 | 0.10 | 0.72 | 27 | 10.3 | 0.24 |

Table 4

| | Modulus of elasticity in flexure (GPa) | |
|---|---|---|
| | Length direction (longitudinal direction) | Width direction (transverse direction) |
| Example 23 | 0.4 | 0.06 |
| Example 24 | 1.2 | 0.12 |
| Example 28 | 1.3 | 0.60 |
| Example 29 | 3.9 | 1.70 |
| Comparative example 12 | Too low to be measured | Too low to be measured |

INDUSTRIAL APPLICABILITY

The oxidized acrylic fiber nonwoven fabric of the invention is thin, dense, flame-proof, heat insulating and compact.

The carbon fiber nonwoven fabric of the invention is thin and dense and has a thickness, density, gas permeability and pore size most suitable as an electrode diffusion layer of a fuel cell. The carbon fiber nonwoven fabric of the invention can be preferably produced by carbonization treatment of the oxidized acrylic fiber nonwoven fabric of the invention.

Since the carbon fiber nonwoven fabric of the invention is high in modulus of elasticity in flexure, small in the deformation due to compression, small in surface roughness, large in flexibility and high in tensile strength, it is suitable as a material for forming an electrode diffusion layer. A fuel cell using the carbon fiber nonwoven fabric of the invention as the electrode diffusion layers shows high cell performance.

**Claims**

1. An oxidized acrylic fiber nonwoven fabric, **characterized in that** it has a weight per square-meter of 70 to 190 g/m$^2$, a thickness of 0.1 to 0.3 mm and a density of 0.35 to 0.8 g/cm$^3$.

2. An oxidized acrylic fiber nonwoven fabric, according to claim 1, wherein the thickness change due to compression as the difference between the thickness at a planar pressure of 0.15 MPa and the thickness at a planar pressure of 1.0 MPa is 0.15 mm or less.

3. An oxidized acrylic fiber nonwoven fabric, according to claim 1, wherein the oxidized acrylic fibers are oriented also in the thickness direction of the nonwoven fabric.

4. An oxidized acrylic fiber nonwoven fabric, according to claim 1, which is substantially formed of oxidized acrylic fibers only.

5. A carbon fiber nonwoven fabric, **characterized in that** it is formed of carbon fibers and has a weight per square-meter of 50 to 150 g/m$^2$, a thickness of 0.1 to 0.25 mm, a density of 0.3 to 0.7 g/cm$^3$, a surface roughness Ra of 30 μm or less, a tensile strength of 0.2 kgf/cm or more and a maximum fracture radius of 20 mm or less.

6. A carbon fiber nonwoven fabric, according to claim 5, which is substantially formed of carbon fibers only.

7. A carbon fiber nonwoven fabric, **characterized in that** it is formed of substantially carbon fibers only and has a weight per square-meter of 50 to 150 g/m$^2$, a thickness of 0.1 to 0.25 mm, a density of 0.3 to 0.7 g/cm$^3$, a surface roughness Ra of 30 μm or less, a peak size of 10 to 60 μm in the pore size distribution and a tensile strength of 0.2 kgf/cm or more.

8. A carbon fiber nonwoven fabric, according to claim 5 or 7,
   wherein the thickness change due to compression as the difference between the thickness at a planar pressure of 0.15 MPa and the thickness at a planar pressure of 1.0 MPa is 0.15 mm or less.

9. A carbon fiber nonwoven fabric, according to claim 5 or 7,
   wherein the modulus of elasticity in flexure is 0.1 GPa or more.

10. A carbon fiber nonwoven fabric, according to claim 5 or 7,
    wherein the differential pressure occurring when air of 14 cm/sec is permeated through the nonwoven fabric in the thickness direction is from 1 to 10 mm Aq.

11. A carbon fiber nonwoven fabric, according to claim 5 or 7,
    wherein the electric resistance in the thickness direction is 15 mΩ·cm$^2$ or less.

12. A carbon fiber nonwoven fabric, **characterized in that** it has a weight per square-meter of 60 to 110 g/m$^2$, a thickness of 0.13 to 0.22 mm, a density of 0.4 to 0.7 g/cm$^3$, a maximum fracture radius of 20 mm or less, a surface roughness Ra of 20 μm or less, a thickness change due to compression as the difference between the thickness at a planar pressure of 0.15 MPa and the thickness at a planar pressure of 1.0 MPa is 0.1 mm or less, a tensile strength of 0.5 kgf/cm or more, a modulus of elasticity in flexure of 0.1 GPa or more, a peak size of 15 to 50 μm in the pore sizedistribution, an electric resistance of 15 mΩ·cm$^2$ or less in the thickness direction, and a differential pressure of 2 to 7 mm Aq occurring when air of 14 cm/sec is permeated through the nonwoven fabric in the thickness direction.

13. A carbon fiber nonwoven fabric, according to claim 5 or 12, wherein carbon black is contained on the surface of and/or inside the fabric.

14. A carbon fiber nonwoven fabric, according to claim 5 or 12, which contains a water-repellent substance.

15. A carbon fiber nonwoven fabric, **characterized in that** it is formed of carbon fibers and a water-repellent substance and has a weight per square-meter of 60 to 180 g/m$^2$, a thickness of 0.1 to 0.25 mm, a density of 0.35 to 0.9 g/cm$^3$, a surface roughness Ra of 25 μm or less, a maximum fracture radius of 20 mm or less and a modulus of elasticity in flexure of 0.5 GPa or more.

**EP 1 548 164 A1**

**16.** A carbon fiber nonwoven fabric, according to claim 15, wherein the thickness change due to compression as the difference between the thickness at a planar pressure of 0.15 MPa and the thickness at a planar pressure of 1.0 MPa is 0.15 mm or less.

**17.** A carbon fiber nonwoven fabric, according to claim 15, which has a tensile strength of 0.7 kgf/cm or more.

**18.** A carbon fiber nonwoven fabric, according to claim 15, wherein the differential pressure occurring when air of 14 cm/sec is permeated through the nonwoven fabric in the thickness direction is from 2 to 12 mm Aq.

**19.** A carbon fiber nonwoven fabric, **characterized in that** it is formed of carbon fibers and a water-repellent substance and has a weight per square-meter of 70 to 130 g/m$^2$, a thickness of 0.13 to 0.22 mm, a density of 0.45 to 0.7 g/cm$^3$, a surface roughness Ra of 15 $\mu$m or less, a maximum fracture radius of 20 mm or less, a thickness change due to compression of 0.1 mm or less as the difference between the thickness at a planar pressure of 0.15 MPa and the thickness at a planar pressure of 1.0 MPa, a tensile strength of 1.0 kgf/cm or more, a modulus of elasticity in flexure of 1.0 GPa or more and a differential pressure of 2 to 8 mm Aq occurring when air of 14 cm/sec is permeated through the nonwoven fabric in the thickness direction.

**20.** A carbon fiber nonwoven fabric, according to claim 15 or 19, which is substantially formed of carbon fibers and a water-repellent substance only.

**21.** A carbon fiber nonwoven fabric, **characterized in that** it is formed of carbon fibers, fine carbon particles and a water-repellent substance, with the fine carbon fibers existing locally on one side of the nonwoven fabric, and has a weight per square-meter of 70 to 200 g/m$^2$, a thickness of 0.12 to 0.27 mm, a surface roughness Ra of 15 $\mu$m or less, a thickness change due to compression of 0.15 mm or less as the difference between the thickness at a planar pressure of 0.15 MPa and the thickness at a planar pressure of 1.0 MPa, and a tensile strength of 0.7 kgf/cm or more.

**22.** A carbon fiber nonwoven fabric, according to any one of claims 5, 7, 12, 15, 19 and 21, wherein the carbon fibers are oriented also in the thickness direction of the nonwoven fabric.

**23.** An electrode using the carbon fiber nonwoven fabric as set forth in any one of claims 5, 7, 12, 15, 19 and 21.

**24.** An electrode diffusion layer using the carbon fiber nonwoven fabric as set forth in any one of claims 5, 7, 12, 15, 19 and 21.

**25.** A fuel cell unit, **characterized in that** the electrode diffusion layer as set forth in claim 24, a catalyst layer and a polymeric electrolyte membrane are disposed in layers.

**26.** A fuel cell, comprising the electrode diffusion layer as set forth in claim 24.

**27.** A method for producing the oxidized acrylic fiber nonwoven fabric as set forth in claim 1, including the step of pressurizing a nonwoven fabric obtained by using oxidized acrylic fibers, at a temperature of 140°C or higher and at a linear pressure of 5 to 200 kgf/cm in the thickness direction using a continuous press.

**28.** A method for producing the carbon fiber nonwoven fabric as set forth in any one of claims 5, 7, 12, 15, 19 and 21, comprising the steps of pressurizing a nonwoven fabric obtained by using oxidized acrylic fibers, at a temperature of 140°C or higher and at a linear pressure of 5 to 200 kgf/cm in the thickness direction, and carbonizing the oxidized acrylic fiber nonwoven fabric.

**29.** A method for producing the oxidized acrylic fiber nonwoven fabric as set forth in claim 1, including the step of pressurizing a nonwoven fabric obtained by using oxidized acrylic fibers, at 140 to 300°C and at 0.5 to 40 MPa for 30 seconds or more by a continuous method.

**30.** A method for producing the carbon fiber nonwoven fabric as set forth in any one of claims 5, 7, 12, 15, 19 and 21, comprising the steps of pressurizing a nonwoven fabric obtained by using oxidized acrylic fibers, at 140 to 300°C and at 0.5 to 40 MPa for 30 seconds or more by a continuous method, and carbonizing the oxidized acrylic fiber nonwoven fabric.

**31.** A method for producing the oxidized acrylic fiber nonwoven fabric as set forth in claim 1, comprising the steps of pressurizing a nonwoven fabric obtained by using oxidized acrylic fibers, at a temperature of 140°C or higher and at a linear pressure of 5 to 200 kgf/cm in the thickness direction by a continuous method, and pressurizing at 140 to 300°C and at a planar pressure of 0.05 to 40 MPa for 10 seconds or more by a continuous method.

**32.** A method for producing the carbon fiber nonwoven fabric as set forth in any one of claims 5, 7, 12, 15, 19 and 21, comprising the steps of pressurizing a nonwoven fabric obtained by using oxidized acrylic fibers, at a temperature of 140°C or higher and at a linear pressure of 5 to 200 kgf/cm in the thickness direction by a continuous method, and pressurizing at 140 to 300°C and at a planar pressure of 0.05 to 40 MPa for 10 seconds or more by a continuous method.

**33.** A method for producing an oxidized acrylic fiber nonwoven fabric, according to claim 29 or 31, wherein the pressurization using a planar pressure by a continuous method is performed by a method comprising intermittent material carrying and a flat plate press in combination.

**34.** A method for producing a carbon fiber nonwoven fabric, according to claim 30 or 32, wherein the pressurization using a planar pressure by a continuous method is performed by a method comprising intermittent material carrying and a flat plate press in combination.

## INTERNATIONAL SEARCH REPORT

| International application No. |
| --- |
| PCT/JP03/12231 |

**A. CLASSIFICATION OF SUBJECT MATTER**
Int.Cl⁷ D04H1/42, H01M4/96, 4/88

According to International Patent Classification (IPC) or to both national classification and IPC

**B. FIELDS SEARCHED**

Minimum documentation searched (classification system followed by classification symbols)
Int.Cl⁷ D04H1/00-18/00, H01M4/96, 4/88

Documentation searched other than minimum documentation to the extent that such documents are included in the fields searched
Jitsuyo Shinan Koho            1926-1996   Toroku Jitsuyo Shinan Koho   1994-2003
Kokai Jitsuyo Shinan Koho      1971-2003   Jitsuyo Shinan Toroku Koho   1996-2003

Electronic data base consulted during the international search (name of data base and, where practicable, search terms used)
WPIL

**C. DOCUMENTS CONSIDERED TO BE RELEVANT**

| Category* | Citation of document, with indication, where appropriate, of the relevant passages | Relevant to claim No. |
| --- | --- | --- |
| E,X | JP 2003-239163 A  (Toho Tenakkusu Kabushiki Kaisha), 27 August, 2003 (27.08.03), Claims; examples (Family: none) | 1-12 |
| X | WO 02/42534 A1  (Toho Tenakkusu Kabushiki Kaisha), 30 May, 2002 (30.05.02), | 1-12,23,27, 28 |
| Y | Claims; examples & EP 1273685 A1 | 13-22,24-26, 29-34 |
| X | JP 2002-194650 A  (Toho Tenakkusu Kabushiki Kaisha), 10 July, 2002 (10.07.02), | 1-12,23,27, 28 |
| Y | Claims; examples (Family: none) | 13-22,24-26, 29-34 |

☒ Further documents are listed in the continuation of Box C.      ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 22 December, 2003 (22.12.03) | 20 January, 2004 (20.01.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

31

<table>
<tr><td colspan="2"><b>INTERNATIONAL SEARCH REPORT</b></td><td>International application No.<br>PCT/JP03/12231</td></tr>
</table>

| C (Continuation). | DOCUMENTS CONSIDERED TO BE RELEVANT | |
|---|---|---|
| Category* | Citation of document, with indication, where appropriate, of the relevant passages | Relevant to claim No. |
| Y | EP 1139471 A1 (TORAY INDUSTRIES, INC.),<br>04 October, 2001 (04.10.01),<br>Claims; examples<br>& WO 01/22509 A1 | 13-22,24-26,<br>29-34 |
| Y | JP 2000-70631 A (Osaka Gas Co., Ltd.),<br>07 March, 2000 (07.03.00),<br>Par. Nos. [0060], [0061]; examples; Fig. 5<br>(Family: none) | 29-34 |
| A | JP 2002-266217 A (Mitsubishi Rayon Co., Ltd.),<br>18 September, 2002 (18.09.02),<br>Full text<br>(Family: none) | 1-34 |
| A | EP 1063716 A2 (JOHNSON MATTHEY PLC.),<br>27 December, 2000 (27.12.00),<br>Full text<br>& JP 2001-32163 A | 1-34 |

Form PCT/ISA/210 (continuation of second sheet) (July 1998)